# EUROPÄISCHE PATENTSCHRIFT

(11) **EP 4 344 851 B1**
(45) Veröffentlichungstag und Bekanntmachung des Hinweises auf die Patenterteilung: **13.08.2025**
(21) Anmeldenummer: 23195387.8
(22) Anmeldetag: 05.09.2023
(51) Int. Cl.: B29C 49/42, B29C 49/48, B29C 49/68, B29C 49/06, B29C 49/36, B29L 31/00

(54) **ANLAGE ZUM HERSTELLEN VON KUNSTSTOFFBEHÄLTNISSEN MIT UNIVERSAL EINSETZBAREM WECHSELROBOTER UND VERFAHREN HIERZU**
INSTALLATION FOR PRODUCING PLASTIC CONTAINERS WITH A UNIVERSAL EXCHANGEABLE CHANGING ROBOT AND METHOD THEREFOR
INSTALLATION DE FABRICATION DE RÉCIPIENTS EN PLASTIQUE AVEC ROBOT INTERCHANGEABLE INSÉRABLE UNIVERSEL ET PROCÉDÉ ASSOCIÉ

(30) Priorität: 30.09.2022 DE 102022125324
(43) Veröffentlichungstag der Anmeldung: 03.04.2024
(73) Patentinhaber: Krones AG, 93073 Neutraubling (DE)
(72) Erfinder: Scharl, Thomas, 93073 Neutraubling (DE); Hack, Andreas, 93073 Neutraubling (DE); Wagner, Martin, 93073 Neutraubling (DE); Schwoed, Gerhard, 93073 Neutraubling (DE)
(74) Vertreter: Hannke Bittner & Partner mbB Regensburg

(56) Entgegenhaltungen:
- DE-A1- 102009 023 726
- US-A1- 2012 100 238
- US-A1- 2015 145 179
- US-A1- 2015 251 366
- US-A1- 2021 163 167

## Beschreibung

Die vorliegende Erfindung bezieht sich auf eine Anlage zum Herstellen von Kunststoffbehältnissen und auf ein Verfahren zum Herstellen von Kunststoffbehältnissen. Derartige Anlagen und Verfahren sind aus dem Stand der Technik seit langem bekannt. Bei einer bekannten Vorgehensweise werden zunächst Kunststoffvorformlinge in einem Ofen erwärmt und anschließend diese erwärmten Kunststoffvorformlinge zu den Kunststoffbehältnissen umgeformt, was beispielsweise mittels Streckblasmaschinen erfolgen kann. Dabei werden üblicherweise die Kunststoffvorformlinge vereinzelt durch einen Ofen geführt und anschließend von einer Umformungseinrichtung, beispielsweise in Blasstationen zu den Kunststoffbehältnissen expandiert.

Im Stand der Technik ist es dabei gelegentlich erwünscht, die Behältnisse zu wechseln und beispielsweise eine Umstellung auf andere Behältnisse vorzunehmen. Unterschiedliche Behältnisse können sich in unterschiedlichsten Charakteristika unterscheiden, wie beispielsweise deren Füllvermögen, deren Mündungsdurchmessern und dergleichen. Daher ist es im Stand der Technik üblicherweise erforderlich, eine Vielzahl von Elementen sowohl der Erwärmungseinrichtung als auch der Umformungseinrichtung auszuwechseln, wie beispielsweise in der US 2015/251366 A1, US 2015/145179 A1, US 2021/163167 A1 und US 2012/100238 A1 beschrieben. Dies ist im Stand der Technik mit erheblichem Aufwand verbunden.

Daher sind aus dem Stand der Technik teilweise automatisierte Wechselvorgänge bekannt.

So ist beispielsweise aus dem internen Stand der Technik der Anmelderin bekannt, dass bei einer Änderung eines Mündungsdurchmessers ein manueller Wechsel von Heizdornen und Abschirmplatten erfolgt. Daneben ist auch ein halbautomatischer Wechselautomat für Heizdorne und Abschirmplatten in Entwicklung. Aus der DE 10 2009 023726 A1 ist ein Wechselautomat mit einem Magazin-Puffersystem für entnommene und einzusetzende Heizdorn-Gruppen bekannt.

Daneben ist auch im Stand der Technik ein automatischer Wechsel von Blasformen durch ein stationäres Robotersystem bekannt.

Damit besteht im Stand der Technik nach wie vor der Nachteil, dass ein Wechsel von Elementen wie etwa Abschirmplatten oder Heizdornen sehr zeitintensiv ist, wobei gleichzeitig die Anlage nicht betrieben werden kann. Hinsichtlich anderer Gerätschaften wie beispielsweise von Blasformen ist ein Wechsel ebenfalls aufwendig und ergonomisch unvorteilhaft, da diese sehr schwer sind.

Weiterhin kommt es im Stand der Technik des Öfteren zu einer Montage falscher Blasformen, Heizdornen oder Abschirmplatten oder auch einer fehlerhaften Montage der Teile bei einem manuellen Wechsel. Ein weiterer Nachteil im Stand der Technik ist, dass durch derartige Robotersysteme oftmals die Zugänglichkeit der Anlage eingeschränkt ist.

Der vorliegenden Erfindung liegt daher die Aufgabe zugrunde, die Effizienz derartiger Wechselvorgänge insbesondere auch durch den Einsatz von Wechselrobotern zu erhöhen.

Eine erfindungsgemäße Anlage zum Herstellen von Kunststoffbehältnissen weist eine Erwärmungseinrichtung zum Erwärmen von Kunststoffvorformlingen auf, wobei diese Erwärmungseinrichtung eine Transporteinrichtung zum Transportieren von Kunststoffvorformlingen entlang eines vorgegebenen ersten Transportpfads aufweist, sowie eine Vielzahl von Halteeinrichtungen zum Halten der Kunststoffvorformlinge. Weiterhin weist die Erwärmungseinrichtung wenigstens eine Erwärmungseinheit auf, welche die Kunststoffvorformlinge während ihres Transports erwärmt.

Weiterhin weist die Anlage eine Umformungseinrichtung zum Umformen der Kunststoffvorformlinge zu Kunststoffbehältnissen auf, welche dazu geeignet ist, die von der Erwärmungseinrichtung erwärmten Kunststoffvorformlinge durch Beaufschlagung mit einem fließfähigen (und insbesondere gasförmigen) Medium (insbesondere Druckluft)) zu expandieren, wobei die Umformungseinrichtung eine Vielzahl von Umformungsstationen aufweist, welche die Kunststoffvorformlinge zu den Kunststoffbehältnissen umformen und wobei sowohl die Erwärmungseinrichtung als auch die Umformungseinrichtung wechselbare Elemente bzw. Formatteile aufweisen und insbesondere wechselbare Elemente, die zum Zwecke eines Formatwechsels wechselbar sind.

Insbesondere handelt es sich bei den wechselbaren Elementen um sogenannte Formatteile, die gewechselt werden, wenn etwa eine Behältnisgattung gewechselt wird.

Erfindungsgemäß weist die Anlage eine Wechseleinrichtung auf, welche dazu geeignet ist, sowohl wechselbare Elemente der Erwärmungseinrichtung als auch wechselbare Elemente der Umformungseinrichtung zu wechseln, wobei bevorzugt die Wechseleinrichtung - insbesondere durch einen mobilen Roboter - zwischen wenigstens zwei verschiedenen Positionen bewegbar ist..

Im Gegensatz zum Stand der Technik, der Wechseleinrichtungen beispielsweise für eine Blasformmaschine vorsieht, wird im Rahmen der vorliegenden Erfindung vorgeschlagen, eine einheitliche Wechseleinrichtung zu schaffen, welche sowohl wechselbare Elemente und insbesondere Formatteile der Umformungseinrichtung als auch wechselbare Elemente und insbesondere Formatteile der Erwärmungseinrichtung wechseln kann.

Bei einer bevorzugten Ausführungsform sind die Erwärmungseinrichtung und die Umformungseinrichtung an verschiedenen Orten positioniert. So können beispielsweise diese Bestandteile an unterschiedlichen Positionen in einer Maschinenhalle angeordnet sein und die Kunststoffvorformlinge werden zunächst durch die Erwärmungseinrichtung transportiert und anschließend zu der und/oder durch die Umformungseinrichtung.

Bevorzugt ist die wenigstens eine Erwärmungseinheit stationär angeordnet und die Kunststoffvorformlinge werden an dieser vorbeitransportiert. So kann es sich beispielsweise um Infrarot Erwärmungseinheiten handeln, welche beispielsweise Heizstrahler zu Erwärmung der Kunststoffvorformlinge aufweisen.

Bei einer bevorzugten Ausführungsform ist die Transporteinrichtung umlaufend ausgebildet. So kann die Transporteinrichtung beispielsweise eine Transportkette aufweisen, an der eine Vielzahl von Halteeinrichtungen zum Halten der Kunststoffvorformlinge angeordnet ist. Bevorzugt transportiert die Transporteinrichtung die Kunststoffvorformlinge wenigstens abschnittsweise entlang eines geradlinigen Transportpfades und wenigstens abschnittsweise entlang eines gekrümmten und insbesondere kreisförmig gekrümmten Transportpfads. Bevorzugt handelt es sich bei den Erwärmungseinheiten um Infraroterwärmungseinheiten. Es wäre jedoch auch die Verwendung von Mikrowellenerwärmungseinheiten denkbar.

Bei einer bevorzugten Ausführungsform handelt es sich bei den Halteeinrichtungen um Haltedorne, die in die Mündungen der Kunststoffvorformlinge einführbar sind. Besonders bevorzugt sind diese Haltedorne drehbar, sodass die Kunststoffvorformlinge während ihrer Erwärmung bezüglich ihrer Längsachse gedreht werden können.

Besonders bevorzugt weist die Erwärmungseinrichtung auch eine Vielzahl von Wärmeabschirmelementen auf, welche dazu geeignet und bestimmt sind, eine übermäßige Erwärmung der Mündungsbereiche der Kunststoffvorformlinge zu vermeiden. Bekanntlich werden im Stand der Technik lediglich die Grundkörper dieser Kunststoffvorformlinge erwärmt, nicht aber deren Gewindungen und deren Mündungen. Diese bleiben im Wesentlichen unverändert. Aus diesem Grunde ist es vorteilhaft, wenn die Wärme, die dazu dient, die Kunststoffvorformlinge an ihren Grundkörpern zu erwärmen, nicht auch zu den Mündungen gelangt, da diese ansonsten verformt würden. Vorteilhaft ist jeder Halteeinrichtung wenigstens eine derartige Abschirmeinrichtung zugeordnet.

Besonders bevorzugt weisen die Umformungsstationen jeweils wechselbare Blasformen auf. Diese Blasformen sind dabei besonders bevorzugt mehrteilig ausgebildet und weisen bevorzugt zwei Seitenteile und ein Bodenteil auf. Diese Blasformen bilden damit einen Hohlraum aus, der zum Expandieren der Kunststoffvorformlinge dient. Bei einer weiteren vorteilhaften Ausführungsform weisen die Umformungsstationen auch jeweils Beaufschlagungseinrichtungen und insbesondere Blasdüsen auf. Diese können an eine Mündung der Kunststoffvorformlinge angelegt werden, um diese so mit dem fließfähigen Medium zu beaufschlagen. Bei einer weiteren vorteilhaften Ausführungsform weisen die Umformungsstationen auch sogenannte Reckstangen auf, welche in das Innere der Kunststoffvorformlinge einführbar sind, um diese so in deren Längsrichtung zu dehnen. Besonders bevorzugt sind sowohl die Blasformen, bzw. die Blasformteile derartige oben genannte Wechselelemente bzw. zu wechselnde Elemente.

Besonders bevorzugt weist die Wechseleinrichtung einen Wechselroboter zum Wechseln der wechselbaren Elemente auf. Dieser Roboter kann dabei beispielsweise wie unten genauer beschrieben, ein mehrachsiger Roboter sein, der eine Greifeinrichtung zum Greifen des jeweils auszuwechselnden Wechselelements aufweist.

Bei einer weiteren bevorzugten Ausführungsform weist die Wechseleinrichtung einen beweglichen Träger auf, sowie eine erste Robotereinheit, die nachstehend auch als Wechseleinrichtung bezeichnet wird und die auf diesem Träger montierbar ist. Weiterhin weist die Wechseleinrichtung optional eine weitere Robotereinrichtung auf, welche dazu dient, die erste Robotereinheit an dem Träger anzuordnen. Die erste Robotoreinnheit kann bevorzugt mit mehreren Greifeinrichtungen ausgestattet werden, etwa einer Greifeinrichtung zum Greifen von Blasformen und einer Greifeinrichtungen zum Greifen von Haltedornen und Abschirmplatten bzw. zum Greifen von Aufnahmeeinrichtungen, welche zum Aufbewahren von Heizdornen und/oder Abschirmplatten bestimmt sind. Daneben kann die Wechseleinrichtung auch eine oder mehrere Magazineinrichtungen aufweisen, wie unten genauer beschrieben.

Es ist beispielsweise möglich, dass der eigentliche Handlingsroboter (Wechseleinrichtung) von einem mobilen Roboter (AGV - automated guided vehicle oder AMR - autonomous mobile robot), beispielsweise durch Unterfahren, und beispielsweise mit Hilfe einer Hubeinheit aufgenommen und an verschiedenen Positionen abgestellt wird

Bei einer vorteilhaften Ausführungsform ist die Wechseleinrichtung zwischen einer ersten Position, in der sie zum Wechseln von wechselbaren Elementen der Erwärmungseinrichtung positioniert ist, und einer zweiten Position, in der sie zum Wechseln von wechselbaren Elementen der Umformungseinrichtung positioniert ist, bewegbar. Bevorzugt ist dabei die Wechseleinrichtung oder ein Bestandteil der Wechseleinrichtung an den jeweiligen Positionen positionierbar und/oder befestigbar, wobei an diesen Positionen auch unten genauer beschriebene Dockingstationen angeordnet sein können, welche eine Befestigung und/oder eine datentechnische Verbindung und/oder eine Energieversorgung und/oder eine Druckluftversorgug zwischen der Wechseleinrichtung und dieser Dockingstation ermöglichen. Auf diese Weise kann die Wechseleinrichtung auch steuerungsseitig in die jeweiligen Anlagenteile wie insbesondere die Erwärmungseinrichtung und die Umformungseinrichtung eingebunden werden.

Die vorliegende Anmeldung basiert bevorzugt auf einer Basistechnologie eines mobilen Robotersystems, welches besonders bevorzugt wechselbare Aufsätze bzw. Greifeinrichtungen aufweist. Daneben können auch Ideen berücksichtigt werden, welche bisher lediglich in der Materialversorgung beschrieben wurden, beispielsweise bei Etikettiermaschinen.

Bei einer weiteren vorteilhaften Ausführungsform weist die Anlage wenigstens eine weitere Transporteinrichtung auf, welche die erwärmten Kunststoffvorformlinge von der Erwärmungseinrichtung zu der Umformungseinrichtung transportiert. Bevorzugt ist diese wenigstens eine weitere Transporteinrichtung wenigstens ein Transportstern oder weist wenigstens einen Transportstern auf.

Bei einer weiteren vorteilhaften Ausführungsform sind die wechselbaren Elemente der Erwärmungseinrichtung aus einer Gruppe von wechselbaren Elementen und insbesondere Formatteilen ausgewählt, welche Greifklammern, Haltedorne, Abschirmplatten zur Hitzeabschirmung und dergleichen enthält. Bei einer weiteren vorteilhaften Ausführungsform sind die wechselbaren Elemente der Umformungseinrichtung aus einer Gruppe von wechselbaren Elementen und/oder Formatteilen ausgewählt, welche Greifklammern, Blasformen, Blasformteile, Reckstangen, Blasdüsen und dergleichen enthält.

Bei einer weiteren vorteilhaften Ausführungsform weist die Wechseleinrichtung wenigstens eine Greifeinrichtung zum Greifen des wechselbaren Elements auf. Bevorzugt ist diese Greifeinrichtung dabei austauschbar und kann insbesondere je nach dem auszutauschenden wechselbaren Element ausgetauscht werden.

Bei einer weiteren vorteilhaften Ausführungsform ist die Wechseleinrichtung mit wenigstens zwei unterschiedlichen Greifeinrichtungen bestückbar, wobei bevorzugt eine der Greifeinrichtungen zum Wechseln eines wechselbaren Elements der Erwärmungseinrichtung bestimmt ist, und die andere der Greifeinrichtungen zum Wechseln eines wechselbaren Elements der Umformungseinrichtung bestimmt ist. Auf diese Weise kann die gleiche Wechseleinrichtung sowohl zum Wechseln von Formatteilen der Erwärmungseinrichtung als auch zum Wechseln von Formatteilen der Umformungseinrichtung eingesetzt werden.

Das hier beschriebene System zum (voll)automatischen Wechsel der zu wechselnden Elemente, insbesondere der Heizdorne und Abschirmplatten an der Erwärmungseinrichtung sowie zum vollautomatischen Wechsel von wechselbaren Elementen und insbesondere Blasformen an der Umformungseinrichtung weist einen mobilen Roboter (und/oder eine mobile Plattform), einen wechselbaren Aufsatz, insbesondere mit Knickarmroboter zum Handling der Heizdorne, Abschirmplatten und Blasformen auf und eine bzw. mehreren mobilen Transporteinheiten und/oder Magazineinrichtungen zum Lagern der Heizdorne und Abschirmplatten sowie zum Lagern von Blasformen. Bei dem mobilen Roboter oder der mobilen Plattform kann es sich insbesondere aber nicht ausschließlich um ein AGV (automated guided vehicle) oder ein FTS (Fahrerloses Transportsystem) oder ein AMR (autonomous mobile robot) handeln.

Der Wechselaufsatz und die mobilen Transporteinheiten können durch den mobilen Roboter aufgenommen werden. Zusätzlich können ggf. mittels unterschiedlicher Dockingstationen der Wechselaufsatz (ggfs. mit Knickarmroboter in der Dockingstation) zentriert und fixiert (um eine Wiederholgenauigkeit zu garantieren und/oder dynamische. Kräfte sicher ableiten zu können) und die mobilen Transporteinheiten in der Dockingstation zentriert und ggf. fixiert werden.

Bei einer weiteren vorteilhaften Ausführungsform ist die Wechseleinrichtung auch mit unterschiedlichen Greifeinrichtungen für unterschiedliche Elemente der Erwärmungseinrichtung und/oder der Umformungseinrichtung ausstattbar.

Die Top-Unit bzw. die Wechseleinrichtung weist bevorzugt ein Rahmengestell auf. Darauf ist bevorzugt ein mehrachsiger, insbesondere ein wenigstens dreiachsiger, bevorzugt ein wenigstens vierachsiger, bevorzugt ein wenigstens fünfachsiger und insbesondere ein sechsachsiger Manipulator montiert. Der Manipulator ist bevorzugt an der Handachse mit einem Greifersystem und insbesondere mit einem Greiferwechselsystem ausgestattet. Dadurch ist es möglich, den Manipulator mit unterschiedlichen Greifeinrichtungen für unterschiedliche wechselbare Elemente auszustatten, insbesondere sowohl mit einem Greifer für Blasformen als auch mit einem Greifer für Heizdorne und Abschirmplatten. Der Wechsel der Greifer findet bevorzugt über ein handelsübliches vollautomatisches Greiferwechselsystem am Handgelenk des Manipulators statt.

Bei einer weiteren vorteilhaften Ausführungsform weist die Wechseleinrichtung einen mobilen Träger auf, an dem eine Robotereinrichtung angeordnet ist. Dieser mobile Träger kann dabei das oben erwähnte Rahmengestell sein oder aufweisen, welches beispielsweise sich auf Schienen bewegen kann. Es wäre jedoch auch möglich, dass der mobile Träger frei im Raum bewegbar ist. Bei der Robotereinrichtung kann es sich um einen mehrachsigen beispielsweise einen sechsachsigen Roboter oder Manipulator handeln. Besonders bevorzugt handelt es sich bei dem Roboter um einen Knickarmroboter.

Bei einer weiteren vorteilhaften Ausführungsform weist die Anlage und insbesondere die Wechseleinrichtung wenigstens eine Magazineinrichtung zur Aufbewahrung von wechselbaren Elementen auf, wobei bevorzugt auch diese Magazineinrichtung mobil ausgebildet ist. Unter mobil wird dabei insbesondere verstanden, dass diese Magazineinrichtung durch einen Benutzer zwischen wenigstens zwei Positionen bewegbar ist und/oder dass die Magazineinrichtung von einem mobilen Roboter (AGV) bewegbar ist.

Bevorzugt ist diese Magazineinrichtung auch durch den Roboter erreichbar oder kann beispielsweise von dem Robotergestell mitgeführt werden. In dieser Magazineinrichtung können beispielsweise eine Vielzahl von wechselbaren Elementen wie etwa eine Vielzahl von Heizdornen aufgenommen werden. Bevorzugt weist die Anlage mehrere Magazineinrichtungen auf, die bevorzugt für unterschiedliche wechselbare Elemente ausgebildet sind. Bei einer bevorzugten Ausführungsform ist die Magazineinrichtung als Schubmagazin ausgebildet, d. h., dass beispielsweise Fächer der Magazineinrichtung herausgezogen werden können.

Die Transporteinheit und/oder Magazineinrichtung für Heizdorne und Abschirmplatten weist bevorzugt ein Rahmengestell, auf dem ein bevorzugt mehrere Schubmodulen aufweisendes Schubmagazin angebracht ist. Das Rahmengestell ist bevorzugt so ausgeführt, dass die Top-Unit bzw. die Wechseleinrichtung an beliebigen Standorten oder auf einer Dockingstation abgesetzt werden kann.

Pro Schubmodul können bevorzugt jeweils wenigstens 10 und bevorzugt bis zu 50 Aufnahmen mit je fünf Heizdornen und Abschirmplatten aufgenommen werden. Dazu ist im Schubmodul eine Platte, vorzugsweise aus Kunststoff angebracht, diese verfügt über Aussparungen, in die die Aufnahmen formschlüssig eingestellt werden können.

Die Heizdorne und Abschirmplatten sind bevorzugt in der Magazineinrichtung von drei Seiten durch Abdeckungen vor der Umwelt abgeschirmt. So können diese vor Verunreinigung und Beschädigung geschützt werden. Bei Bedarf kann auch die verbleibende offene Seite durch beispielsweise ein Rollentor verschlossen werden. Von oben werden bevorzugt die lagernden Heizdorne und Abschirmplatten ebenfalls durch eine Abdeckung geschützt.

Zum Öffnen der Schubmodule sind bevorzugt an ihnen Griffe angebracht, insbesondere ein handelsüblicher Griff zum manuellen Öffnen des Moduls. Daneben kann ein Griff vorgesehen sein, der so ausgeführt ist, dass dieser von der oben beschriebenen Greifeinrichtung gegriffen werden kann.

Das Schubmodul verfügt bevorzugt über zwei Auszugsschienen, wobei besonders bevorzugt eine in ihren Endlagen gesichert ist. Die Entriegelung der Endlagensicherung kann besonders bevorzugt durch die oben beschrieben Greifeinrichtung am Griff betätigt werden.

Das Rahmengestell kann durch Zentrierelemente auf der unten beschriebenen Dockingstation aufgesetzt und in der Position zentriert werden oder durch Maschinenfüße frei auf dem Boden abgestellt werden.

Zudem besteht alternativ die Möglichkeit, dass der Unterbau des Schubmagazins entfällt und durch eine solche Aufnahme ersetzt wird, dass das Schubmodul manuell (Hubwagen, Gabelstapler) oder durch ein Gabelstapler-AGV transportiert werden kann. Dabei kann die Transporteinheit auch wieder frei auf dem Boden oder zur Zentrierung auf einer Andockstation abgesetzt werden.

Die Transporteinheit bzw. Magazineinrichtung für die Blasformen weist bevorzugt ein Transportgestell und ein Blasformenmagazin auf. Das Rahmengestell ist vorteilhaft so ausgeführt, dass die Top-Unit bzw. die Wechseleinrichtung an beliebigen Standorten oder auf einer Dockingstation abgesetzt werden kann.

Das auf dem Transportgestell montierte Blasformenmagazin ist bevorzugt wie aus dem internen Stand der Anmelderin bekannte Blasformenmagazine von stationären Blasformenwechselrobotern ausgeführt. Zum Transportieren verschiedener Blasformen gibt es das Magazin in verschiedenen Ausführungen (z. B. für Blasformen des Außendurchmesser 160 mm oder 125 mm) in einem Magazin können bevorzugt bis zu 36 Blasformen gelagert werden.

Das Rahmengestell kann wie die oben beschriebene Transporteinheit für Heizdorne und Abschirmplatten durch Zentrierelemente auf der unten beschriebenen Dockingstation aufgesetzt und in der Position zentriert werden oder durch Maschinenfüße frei auf dem Boden abgestellt werden.

Zudem besteht alternativ analog zur oben beschriebenen Magazineinrichtung die Möglichkeit, dass der Unterbau des Blasformenmagazins entfällt und durch eine solche Aufnahme ersetzt wird, dass das Blasformenmagazin manuell (Hubwagen, Gabelstapler) oder durch ein Gabelstapler-AGV transportiert werden kann. Dabei kann die Transporteinheit auch wieder frei auf dem Boden oder zur Zentrierung auf einer Andockstation abgesetzt werden.

Die Greifeinrichtung ist im einfachsten Fall aus mehreren Bearbeitungsteilen ausgeführt, diese sind bevorzugt miteinander verbunden. Je nach Genauigkeitsanforderung kann der grundsätzliche Aufbau der Greifeinrichtung aber auch aus einem massiven Bearbeitungsteil bestehen oder ein solches aufweisen. Die Greifeinrichtung kann mittels eines Flansches direkt mit einem Roboter verbunden werden oder mit einem Adapter für ein Schnellwechselsystem.

Die Heizdorne und Abschirmplatten werden in einer Aufnahme bzw. einer Magazineinrichtung bereitgestellt, die vom Greifer in eine Wechselvorrichtung am Heizmodul, d.h. der Erwärmungseinrichtung eingesetzt bzw. aus dieser entnommen wird. Die Greifeinrichtung hält bevorzugt die Aufnahmen mit den Heizdornen und Abschirmplatten mittels einer form- und/oder kraftschlüssigen Verbindung fest (alternativ ausschließlich formschlüssig oder ausschließlich kraftschlüssig). Dazu ist an der Greifeinrichtung ein Aktor, insbesondere ein pneumatischer Aktor angebracht. Mit diesem ist eine bewegliche Greiferbacke verbunden.

Die feste Greiferbacke wird durch den Roboter so an die Aufnahme herangebracht, dass diese ihn berührt, zum Detektieren des Kontakts kann, falls nötig, ein an der festen Greiferbacke verbauter Kontaktsensor verwendet werden, dies ist jedoch nicht zwingend notwendig.

### Die bewegliche Greiferbacke wird bevorzugt mit Hilfe des (insbesondere pneumatischen)

Aktors an die Aufnahme herangefahren und klemmt diese. Zusätzlich kann ein Identifizieren der Abschirmplatten und Heizdorne (z.B. Sortenzuordnung) über eine Markierung, beispielsweise einen RFID-Tag an der Aufnahme durch eine Sensoreinrichtung, etwa einen RFID-Sensor an der Greifeinrichtung ermöglicht werden.

Der Greifeinrichtung für Blasformen wird bereits im internen Stand der Technik der Anmelderin eingesetzt. Die Greifeinrichtung kann mittels des Befestigungsflansches direkt an einem Roboter, insbesondere einem Knickarmroboter oder an einen Adapter für ein Schnellwechselsystem montiert werden.

Eine Gabel, eine Halteplatte sowie Führungsbolzen und die Pneumatikzylinder werden zum bevorzugt form- und kraftschlüssigen Greifen der Blasformen verwendet. Der Ablauf beim Greifen einer Blasform ist unten genauer beschrieben. Durch eine Sensoreinrichtung, insbesondere einen RFID Lesekopf kann die weiter unten beschriebene Transporteinheit für die Blasformen überprüft werden. Daneben ist es auch möglich, dass Elemente wie insbesondere die Blasformen identifiziert werden. Diese können zu diesem Zweck beispielsweise einen RFID Tag aufweisen.

Bei einer weiteren vorteilhaften Ausführungsform weist die Anlage wenigstens eine stationäre Befestigungsstation und/oder Dockingstation auf, an der wenigstens ein Bestandteil der Wechseleinrichtung anordenbar ist. Bei einer bevorzugten Ausführungsform weist diese Dockingstation eine elektrische und/oder mechanische und/oder fluidtechnische Schnittstelle auf, mit der die Wechseleinrichtung angebunden werden kann. Bei einer bevorzugten Ausführungsform weist die Vorrichtung Befestigungselemente auf, um eine mechanische Befestigung der Wechseleinrichtung an dieser Dockingstation zu erreichen.

An dem Rahmen und insbesondere an der Unterseite des Rahmens, d.h. des oben genannten Rahmengestells sind bevorzugt Zentrier- und/oder Spannelemente angebracht um diesen während des Arbeitens des Manipulators auf der Dockingstation zu fixieren und ein Umkippen oder ähnliches durch die entstehende Dynamik zu verhindern.

Mittels Zentrier- und Spannelementen kann die Wechseleinrichtung auch auf dem mobilen Roboter fixiert werden. So kann ein Arbeiten des Manipulator-Wechselaufsatzes auf der Dockingstation oder auch auf dem mobilen Roboter erfolgen. Durch eine optionale Steckverbindung kann die Spannungs- und Pneumatikversorgung des Wechselaufsatzes und der Austausch von Signalen hergestellt werden. Alternativ oder zusätzlich könnte die Energieversorgung oder der Datenaustausch auch z.B. kabellos über Induktion oder WLAN erfolgen.

Auf der Wechseleinrichtung kann bei Bedarf ein Werkzeugmagazin montiert sein, in dem die Greifer für die Roboter-Applikationen transportiert und beim Greiferwechsel abgelegt bzw. aufgenommen werden können. Auf der Wechseleinrichtung ist bevorzugt mindestens ein Schaltschrank angeordnet, darin sind Komponenten zur Steuerung des Manipulators befestigt. Die Dockingstation weist bevorzugt ein Grundgestell auf. Auf diesem können die für den weiter unten beschriebenen Dockingvorgang benötigten Komponenten befestigt werden. Dazu zählen Zentrierelemente, Hubeinheiten und eine Leiste in dreieckiger Form.

Zur Feinpositionierung des mobilen Roboters für die Umformungseinrichtung z.B. mittels Triangle-Drive dient bevorzugt eine Leiste mit Dreieckskontur an der Stirnseite. Andere Formen wären ebenfalls denkbar. Die genaue Position der Leiste ist variabel. Prinzipiell wären andere Methoden der Feinpositionierung ebenfalls denkbar, z.B. mittels Kamera und QR-Codes.

Bei einem Triangle Drive ist bevorzugt eine Scan - Einrichtung und insbesondere ein Laserscanner (der mobilen Plattform) vorgesehen, welcher eine Dreieckskontur erkennen und sich anhand dieser Kontur genau positionieren kann.

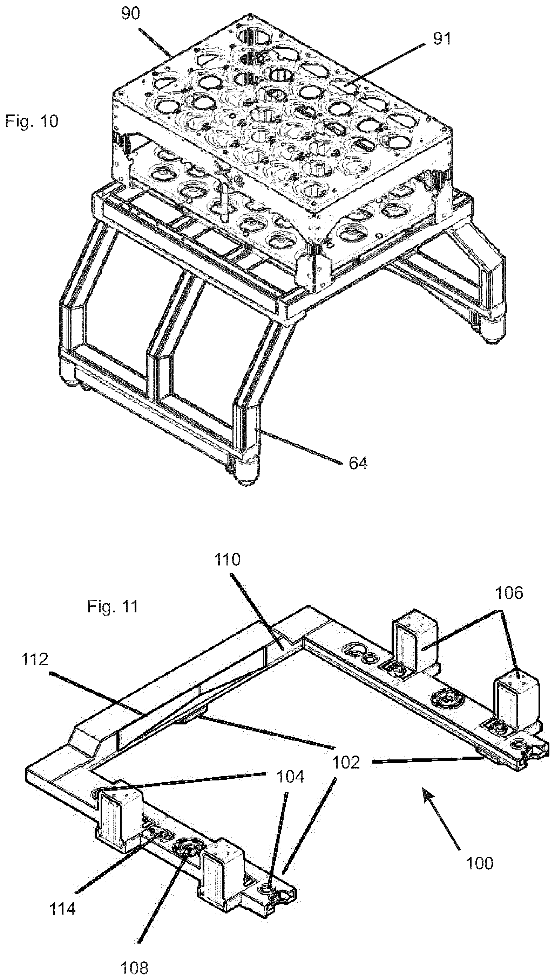

Zur Übernahme der Wechseleinrichtung oder der Magazineinrichtungen dienen bevorzugt Hubeinheiten, beispielsweise vier Hubeinheiten. Diese sind beispielsweis untenstehend in Fig. 11 gezeigt (Bezugszeichen 106). Damit kann die Wechseleinrichtung oder die Magazineinrichtung aufgenommen werden. Die Hubeinheiten können abgelassen werden, so kann die Top-Unit oder Transporteinheit auch bei Bodenunebenheiten auf die Dockingstation übergeben werden. So können Bodenunebenheiten und ein Versatz der Wechseleinrichtung oder der Magazineinrichtungen in verschiedenen Ausprägungen ausgeglichen werden. Wechseleinrichtungen, die bei ihrer Tätigkeit aufgrund einer entstehenden Dynamik fixiert werden müssen, können durch Spannelemente (vorzugsweise pneumatisch) auf der Dockingstation fixiert werden.

Die Dockingstation ist bevorzugt mit drei oder bei Bedarf auch mit mehreren Nivellierelementen am Boden verankert. Durch die Elemente kann die Dockingstation bei der Montage eben ausgerichtet werden.

Die Dockingstation kann, wenn nötig, über einen Multistecker verfügen, damit können Arbeitsmedien wie Druckluft übertragen werden. Es könnten jedoch auch einzelne (Steck)Verbindungen vorgesehen sein. Auch eine elektrische Energieversorgung einer abgestellten Top-Unit kann so ermöglicht werden. Eine Datenübertragung kann dadurch ebenfalls realisiert werden. Alternativ können auch kabellose Datenübertragungssysteme wie WLAN angedacht werden. Die Energieversorgung könnte auch durch Ladekontakte oder durch ein induktives Ladesystem gewährleistet werden.

Bei einer weiteren vorteilhaften Ausführungsform weist die Anlage wenigstens eine Identifikationseinrichtung auf, um wenigstens ein wechselbares Element zu identifizieren. Weiterhin weist bevorzugt die Anlage wenigstens eine Erfassungseinrichtung auf, welche eine Positionsbestimmung wenigstens eines Elements der Wechseleinrichtung und/oder eines wechselbaren Elements ermöglicht. Bevorzugt kann das wechselbare Element eindeutig identifiziert werden. Dies kann etwa über eine Markierung wie einen RFID-Tag erfolgen. Des Weiteren kann (etwa am Manipulator und/der Roboter) ein Kamerasystem (z.B. eine 2 oder 3D Kameratechnik) verbaut sein, welches dem Roboter die Positionsermittlung der Heizdorne und Abschirmplatten im Wechselautomaten oder in der Transporteinheit ermöglicht. Auch die Position der Blasformen kann durch ein Kamerasystem ermittelt werden. So kann ggf. die Zentrierung in der Andockstation oder sogar die Andockstation selbst für die Transporteinheiten entfallen. Zudem kann ein Kamerasystem die Heizdorne, Abschirmplatten oder Blasformen auf Schäden oder richtige Sortenzuordnung (z.B. über RFID-Tags in den Blasformen) prüfen.

Die Top-Unit ist bevorzugt so konstruiert, dass sie um eine möglichst hohe Ausnutzung zu erreichen auch für andere Tätigkeiten, in anderen Bereichen einer Anlage genutzt werden kann. Hierbei kann es sich etwa um einen Etikettenrollenwechsel mittels mobilen Roboter handeln.

Die vorliegende Erfindung ist weiterhin auf ein Verfahren zum Betreiben einer Anlage zum Herstellen von Kunststoffbehältnissen gerichtet, wobei in einem Arbeitsbetrieb der Anlage Kunststoffvorformlinge mit einer Erwärmungseinrichtung erwärmt werden und wobei eine Transporteinrichtung die Kunststoffvorformlinge entlang eines vorgegebenen ersten Transportpfads transportiert, sowie eine Vielzahl von Halteeinrichtungen die Kunststoffvorformlinge hält und wenigstens eine Erwärmungseinheit die Kunststoffvorformlinge während ihres Transports erwärmt, und wobei weiterhin eine Umformungseinrichtung die von der Erwärmungseinrichtung erwärmten Kunststoffvorformlinge durch Beaufschlagung mit einem fließfähigen (und insbesondere gasförmigen) Medium (insbesondere Druckluft) expandiert und so zu den Kunststoffbehältnissen umformt. Dabei weist die Umformungseinrichtung eine Vielzahl von Umformungsstation auf, welche die Kunststoffvorformlinge zu den Kunststoffbehältnissen umformen und weiterhin weist sowohl die Erwärmungseinrichtung als auch die Umformungseinrichtung wechselbare Elemente und/oder wechselbare Formatteile (die insbesondere zur Umstellung auf unterschiedliche Behältergattungen dienen) aufweisen.

Erfindungsgemäß wechselt in einem Wechselbetrieb eine Wechseleinrichtung sowohl wechselbare Elemente der Erwärmungseinrichtung als auch wechselbare Elemente der Umformungseinrichtung wobei die Wechseleinrichtung -insbesondere durch einen mobilen Roboter - zwischen wenigstens zwei verschiedenen Positionen bewegt wird. Bevorzugt erfolgt dieser Wechsel vollautomatisch.

Es wird daher auch verfahrensseitig vorgeschlagen, dass die gleiche Wechseleinrichtung zumindest auch Wechselteile bzw. wechselbare Elemente der Umformungseinrichtung als auch der Erwärmungseinrichtung auswechselt.

Bei einem bevorzugten Verfahren wird auch die Wechseleinrichtung mit unterschiedlichen Greifeinrichtung ein und/oder Wechseleinheiten ausgestattet, um den Wechsel von Wechselteilen (bzw. wechselbaren Elementen) der Umformungseinrichtung und den Wechsel von Wechselteilen (bzw. wechselbaren Elementen) der Erwärmungseinrichtung durchzuführen bzw. durchführen zu können.

Besonders bevorzugt wird wenigstens zeitweise die Wechseleinrichtung oder werden Bestandteile der Wechseleinrichtung von einer ersten Position, die zum Wechseln von wechselbaren Elementen der Umformungseinrichtung dient in eine zweite Position, die zum Wechseln von wechselbaren Elementen der Erwärmungseinrichtung dient, bewegt.

Besonders bevorzugt werden Wechselelemente bzw. wechselbare Elemente wenigstens zeitweise in einer Magazineinrichtung abgelegt. Bei einem bevorzugten Verfahren wird auch diese Magazineinrichtung wenigstens zeitweise in unterschiedliche Positionen bewegt.

Bei einem weiteren bevorzugten Verfahren wird wenigstens zeitweise die Wechseleinrichtung oder ein Bestandteil der Wechseleinrichtung an einer Dockingstation positioniert und/oder befestigt. Dabei ist bevorzugt diese Dockingstation der Umformungseinrichtung oder der Erwärmungseinrichtung zugeordnet und/oder in einem Bereich angeordnet, von dem aus Wechsel von wechselbaren Elementen der Erwärmungseinrichtung oder der Umformungseinrichtung durchgeführt werden können.

Ein beispielhafter Ablauf eines Wechsels von Heizdornen und/oder Abschirmplatten einer Erwärmungseinrichtung gestaltet sich bevorzugt wie folgt. Es wird darauf hingewiesen, dass nicht notwendigerweise alle der nachfolgenden Schritte zwingend auszuführen sind.

Der mobile Roboter nimmt die Roboter-Top-Unit d.h. den eigentlichen Wechselroboter auf und begibt sich zum Heizmodul der Streckblasmaschine bzw. zu der Erwärmungseinrichtung.

Der Wechselroboter (im Folgenden auch als die Roboter-Top-Unit) wird an der Erwärmungseinrichtung abgesetzt und bevorzugt auf die Dockingstation abgesetzt. Dabei wird diese bevorzugt in ihrer Position ausgerichtet, zentriert und mit dieser verbunden (bevorzugt werden eine Spannungsversorgung eine Datenverbindung und/oder eine Medienverbindung hergestellt).

Der mobile Roboter bewegt sich zur Transporteinheit bzw. der Magazineinrichtung, nimmt diese auf und bewegt diese bevorzugt zu einer Dockingstation an der Erwärmungseinrichtung, welche bevorzugt neben der Dockingstation für die Roboter-Top-Unit positioniert ist. Die Magazineinrichtung wird auf die Dockingstation abgesetzt. Dabei wird diese bevorzugt in ihrer Position ausgerichtet und/oder zentriert.

Alternativ wäre es auch denkbar, dass die Magazineinrichtung für Heizdorne/Abschirmplatten durch einen anderen AGV-Typ (z.B. Gabelstapler-AGV) zur Dockingstation gebracht wird. Daneben ist es auch denkbar, dass die Magazineinrichtung ohne Dockingstation abgestellt wird. Auch ist es denkbar, dass eine Einheit zur Aufbewahrung der Heizdorne/Abschirmplatten an oder in der Maschine vorhanden ist.

In einem weiteren Schritt öffnet die Roboter-Top-Unit einen Schub an der Transporteinheit und entnimmt mit Hilfe der Greifeinrichtung eine Aufnahme mit Heizdornen und Abschirmplatten aus dem Heizmodul und positioniert diese in dem geöffneten Schub.

Der Roboter greift bevorzugt mit Hilfe der Greifeinrichtung eine Aufnahme mit Heizdornen und Abschirmplatten aus dem Schub und führt sie dem Wechseleinrichtung in der Erwärmungseinrichtung zu. Die letzten beiden Schritte werden so lange wiederholt, bis alle notwendigen Heizdorne und Abschirmplatten, die im geöffneten Schub der Transporteinheit gelagert sind, gewechselt wurden.

In einem weiteren Schritt wird der Schub der Transporteinheit - insbesondere durch die Roboter-Top-Unit - geschlossen. Anschließend kann ein anderer Schub der Transporteinheit von der Roboter-Top-Unit geöffnet werden. Die darin befindlichen Heizdorne und/oder Abschirmplatten werden ebenfalls durch die Roboter-Top-Unit gewechselt, bis alle notwendigen Heizdorne und Abschirmplatten gewechselt sind. Anschließend wird bevorzugt der Schub (insbesondere durch die Roboter-Top-Unit) geschlossen.

Die beschriebenen Abläufe wiederholen sich so lange bis alle Heizdorne und Abschirmplatten im Heizmodul gewechselt wurden. Der mobile Roboter verfährt anschließend die Transporteinheit an ihren Stellplatz und gibt diese ab. Bevorzugt verfährt anschließend der mobile Roboter die Roboter-Top-Unit an ihren Stellplatz oder ggf. an eine andere Tätigkeitsstätte und steht für weitere und ggf. auch andere Tätigkeiten (z.B. Etikettenrollenwechsel) bereit.

Der Wechsel der Blasformen läuft vereinfacht wie folgt ab:
Der mobile Roboter nimmt die Roboter-Top-Unit auf und begibt sich zu der Umformungseinrichtung. Die Roboter-Top-Unit wird bevorzugt auf die Dockingstation an der Umformungseinrichtung abgesetzt. Dabei wird diese bevorzugt in ihrer Position ausgerichtet, zentriert und/oder mit dieser verbunden (wobei insbesondere eine Spannungsversorgung, eine Datenverbindung und/oder Medienverbindung hergestellt wird).

Der mobile Roboter bewegt sich zur Transporteinheit bzw. Magazineinrichtung für Blasformen und bewegt diese bevorzugt zu einer Dockingstation, welche neben der Dockingstation für die Roboter-Top-Unit positioniert ist.

Die (transportable) Magazinvorrichtung für Blasformen wird auf die Dockingstation abgesetzt. Dabei wird diese bevorzugt in ihrer Position ausgerichtet und/oder zentriert.

Alternativ ist es auch möglich, dass die Magazineinrichtung für Blasformen durch anderen AGV-Typ (z.B. Gabelstapler-AGV) zur Dockingstation gebracht wird und die Magazineinrichtung ohne Dockingstation abgestellt wird. Daneben ist es auch denkbar, dass die Anlage und insbesondere die Umformungseinrichtung eine Einheit zur Aufbewahrung der Blasformen an oder in der Vorrichtung aufweist.

Die nachfolgenden Schritte laufen ab, wie bei einem stationärem Blasformenwechselroboter. Zunächst werden (optional) die Blasformen in der Magazineinrichtung (insbesondere durch die Roboter Top-Unit) überprüft (dabei kann eine Position und/oder eine Belegung der Magazinplätze erfasst werden und die Nummern der Blasformen können (z.B. über RFID-Tag) erkannt werden.

In einem weiteren Schritt wird ein Schutz der Blasmaschine (insbesondere automatisch) geöffnet. Der Blasformenträger wird innerhalb der Blasmaschine für den Wechsel positioniert (was etwa durch eine Veränderung einer Drehstellung des drehbaren Trägers, an dem die Umformungsstationen angeordnet sind, erfolgen kann). In einem weiteren optionalen Schritt wird eine Zentrierung und/oder Druckluftversorgung des Blasformenträgers hergestellt.

Weiterhin wird die Blasform wird durch die Roboter Top-Unit gegriffen und die Blasform wird im Blasformenträger entriegelt. In einem weiteren Schritt wird der Blasformenträger geöffnet und die Blasform damit frei. Die Blasform wird durch den Knickarmroboter auf der Roboter Top-Unit entnommen. Anschließend wird die Blasform in die Magazineinrichtung für die Blasformen abgestellt und Die Greifeinrichtung für die Blasformen wird wieder von der Blasform gelöst.

Anschließend wird eine neue Blasform wird aus der Transporteinheit gegriffen und die Blasform wird durch den Roboter, insbesondere Knickarmroboter im Blasformträger positioniert. Abschließend wird der Blasformträger geschlossen und die Blasform wird im Blasformenträger verriegelt. Schließlich wird die Greifeinrichtung für die Blasformen gelöst.

Durch die Anlagensteuerung wird geprüft, ob der Wechsel der Blasformen an der Anlage vollständig ist. Ist der Wechsel nicht vollständig, wird der nächste Blasformenträger positioniert und die beschriebenen Vorgänge wiederholt, bis alle Blasformen gewechselt sind. Der mobile Roboter verfährt die Magazineinrichtung an ihren Stellplatz und gibt diese ab.

Der mobile Roboter verfährt die Roboter-Top-Unit an ihren Stellplatz oder ggf. an eine andere Tätigkeitsstätte und steht für weitere und ggf. auch andere Tätigkeiten (z.B. Etikettenrollenwechsel) bereit.

Weitere Vorteile und Ausführungsformen ergeben sich aus den beigefügten Zeichnungen:
Darin zeigen:
- Fig. 1: eine schematische Darstellung einer erfindungsgemäßen Anlage zum Herstellen von Kunststoffbehältnissen;
- Fig. 2: eine erste Darstellung einer Wechseleinrichtung;
- Fig. 3: eine Unterseite der in Fig. 2 gezeigten Wechseleinrichtung;
- Fig. 4: eine Darstellung der Greifeinrichtung zum Greifen von Heizdornen;
- Fig. 5: eine Darstellung der Einrichtung aus Fig. 4 mit einem Satz Heizdorne;
- Fig. 6: eine Darstellung einer Greifeinrichtung zum Greifen von Blasformen;
- Fig. 7: eine weitere Ansicht der Einrichtung aus Fig. 6;
- Fig. 8: eine bewegliche Magazineinrichtung;
- Fig. 9: eine Detaildarstellung der in Fig. 8 gezeigten Magazineinrichtung;
- Fig. 10: eine Darstellung einer Einheit zur Aufnahme von Blasformen;
- Fig. 11: eine Darstellung der Andockvorrichtung /Dockingstation;
- Fig. 12: eine Darstellung zur Durchführung eines Dockingvorgangs;
- Fig. 13: eine weitere Darstellung zur Durchführung eines Dockingvorgangs;
- Fig. 14: eine weitere Darstellung zur Durchführung eines Dockingvorgangs;
- Fig. 15: eine weitere Darstellung zur Durchführung eines Dockingvorgangs;
- Fig. 16: eine weitere Darstellung zur Durchführung eines Dockingvorgangs;
- Fig. 17a - 17d: vier Darstellungen zur Veranschaulichung eines Greifvorgangs für Heizdorne und Abschirmplatten;
- Fig. 18a - 18e: fünf Darstellungen zur Veranschaulichung des Greifens von Blasformen;
- Fig. 19: ein Ablaufdiagramm zur Veranschaulichung des Wechsels von Heizdornen und Abschirmplatten; und
- Fig. 20: eine Darstellung zum Ablauf des Wechsels von Blasformen.

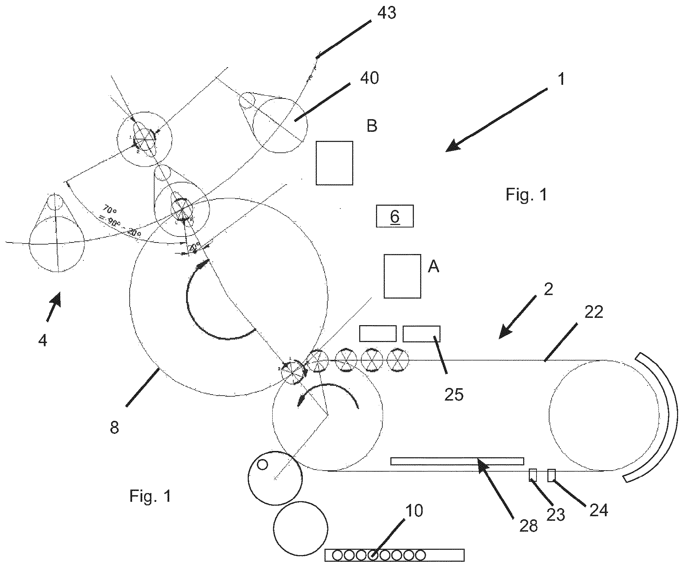

Fig. 1 zeigt eine schematische Darstellung einer erfindungsgemäßen Vorrichtung 1 zum Herstellen von Behältnissen. Dabei werden Kunststoffvorformlinge 10 zunächst einer Erwärmungseinrichtung 2 zugeführt, um von dieser erwärmt zu werden.

Diese Erwärmungseinrichtung 2 weist eine umlaufende Transporteinrichtung 22 auf, an der eine Vielzahl von (nur schematisch gezeigten) Halteeinrichtungen 24 zum Halten der Kunststoffvorformlinge angeordnet ist. Bei diesen Halteeinrichtungen kann es sich beispielsweise um Haltedorne handeln, welche in die Mündungen der Kunststoffvorformlinge eingreifen.

Das Bezugszeichen 28 kennzeichnet eine Dreheinrichtung, welche eine Drehung der einzelnen Kunststoffvorformlinge bezüglich deren Längsrichtungen bewirkt.

Jeder dieser Halteeinrichtungen 24 ist eine Abschirmeinrichtung 23 zugeordnet, welche eine Überhitzung der Mündungsbereiche der Kunststoffvorformlinge verhindert. Die Halteeinrichtungen 24 sowie die Abschirmeinrichtungen 23 und insbesondere Abschirmplatten sind insbesondere Wechselteile, die bei einem Formatwechsel ausgewechselt werden können.

Das Bezugszeichen 25 kennzeichnet Erwärmungseinrichtungen wie Infrarotstrahler, die seitlich neben dem Transportpfad der Kunststoffvorformlinge 10 angeordnet sind.

Eine Transporteinrichtung 8 transportiert die erwärmten Kunststoffvorformlinge von der Erwärmungseinrichtung 2 ab und führt sie einer Umformungseinrichtung 4, insbesondere einer Streckblasmaschine zu. Diese Umformungseinrichtung 4 weist bevorzugt einen drehbaren Träger 43, wie insbesondere ein sog. Blasrad auf, an dem eine Vielzahl von Umformungsstationen 40 angeordnet ist.

Das Bezugszeichen 6 kennzeichnet grob schematisch eine Wechseleinrichtung, welche zwischen einer ersten Position A (in der sie zum Wechseln von zu wechselnden Teilen der Erwärmungseinrichtung 2 dient) und einer zweiten Position B (in der sie zum Wechseln von zu wechselnden Teilen der Umformungseinrichtung 4 dient) bewegbar ist.

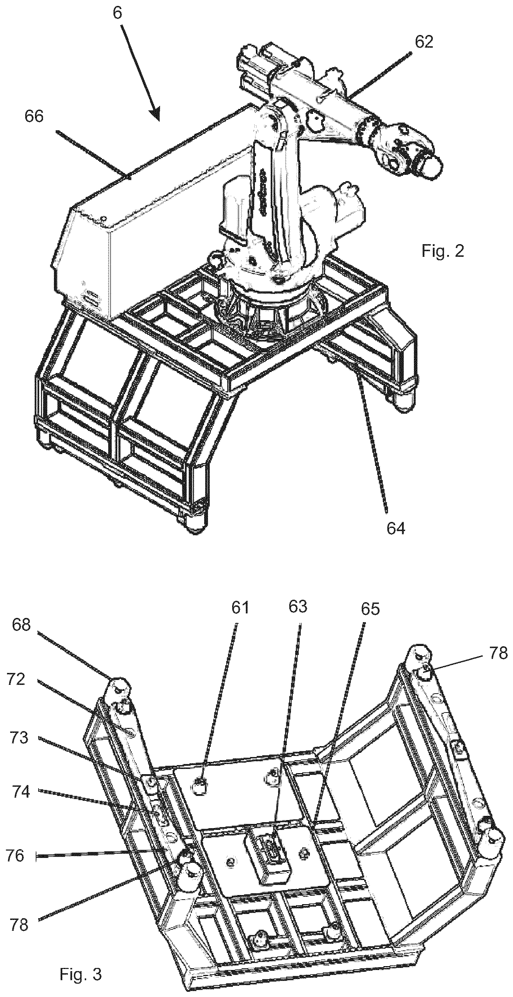

Fig. 2 zeigt eine Darstellung einer Wechseleinrichtung 6. Diese weist einen Wechselroboter 62 (auch als Wechseleinrichtung bezeichnet) auf, der an einem Transportgestell bzw. allgemein an einem Rahmen pder Träger 64 befestigt ist. Die komplette Wechseleinrichtung 6 kann bevorzugt mit dem mobilen Roboter bewegt werden, beispielsweise von Position A nach Position B bewegt werden.

Bevorzugt ist dieser Roboter als Mehrachsenroboter ausgeführt, insbesondere als Sechsachsenroboter.

Das Bezugszeichen 66 kennzeichnet eine Steuerungseinrichtung zum Steuern des Wechselroboters 62. Das Gestell 64 ist beweglich angeordnet, insbesondere mittels eines beweglichen Roboters, kann aber auch gegenüber einem Schienensystem beweglich angeordnet. Daneben ist dieses Gestell 64 auch in der Lage, an einer Dockingstation befestigt zu werden. Bevorzugt ist das Gestell bzw. der Träger derart ausgebildet, dass auch bei der Aufnahme starker Gewichte es nicht zu einem Kippen oder dergleichen kommen kann.

Besonders bevorzugt ist diese Wechseleinrichtung 6 derart gestaltet, dass sie auch in anderen Maschinen oder Anlagenteilen Einsatz finden kann, wie beispielsweise bei Füllmaschinen oder Etikettiermaschinen.

Bei einer besonders bevorzugten Ausführungsform ist die Wechseleinrichtung bzw. der Wechselaufsatz an der Streckblasmaschine an einer Position A und B einsetzbar und zwischen diesen Positionen dort bewegbar, bevorzugt allgemein aber noch zu anderen Positionen (bspw. an einer weiteren Streckblasmaschine oder Etikettiermaschine etc.). Insbesondere erfolgt diese Bewegbarkeit jedoch durch einen mobilen Roboter.

Auch in der kompletten Linie einsetzbar (Inspektion,...).

Fig. 3 zeigt eine Unterseite der in Fig. 2 gezeigten Wechseleinrichtung. Dabei bezieht sich das Bezugszeichen 68 auf einen Maschinenfuß, mittels dessen der Träger 64 beispielsweise auf einem Boden aber auch auf einer Dockingstation abgestellt werden kann. Bevorzugt ist dieser Maschinenfuß 68 elastisch ausgebildet, um auf diese Weise ein sanfteres Abstellen der Wechseleinrichtung auf einer Unterlage zu ermöglichen.

Das Bezugszeichen 78 kennzeichnet eine Zentriereinrichtung wie etwa einen Zentrierbolzen. Mittels dieser Zentriereinrichtung kann eine genaue Position, beispielsweise gegenüber einer Dockingstation erfolgen. Bevorzugt sind hier mehrere derartige Zentriereinrichtungen, hier vier Einrichtungen vorgesehen. Das Bezugszeichen 76 kennzeichnet eine Leiste bevorzugt mit Dreieckskontur zur Feinpositionierung mittels Triangle-Drive (d.h. Feinpositionierung mittels den Laserscannern und einer Referenzkontur)).

Das Bezugszeichen 74 kennzeichnet eine elektrische Verbindungseinrichtung, wie insbesondere aber nicht ausschließlich einen Multistecker. Bevorzugt weist die Vorrichtung auch ein Befestigungsmittel wie etwa den Spannbolzen 73 auf, insbesondere um eine Befestigung an einer Dockingstation zu erreichen.

Das Bezugszeichen 72 kennzeichnet eine Buchse und insbesondere eine Spielbuchse, welche bei einem Anordnen an einer Dockingstation eine gewisse geringe Bewegungsfreiheit bzw. ein gewisses Spiel erlaubt, insbesondere um auf diese Weise besser auftretende Belastungen abfangen zu können. Weiterhin sind bevorzugt noch Zentrierbolzen 61 vorgesehen, welche mit entsprechenden Gegenstücken einer Dockingstation zusammenwirken. Diese Zentrierbolzen 61 dienen für eine Zentrierung der Wechseleinrichtung auf dem mobilem Roboter. Die Elemente 78 dienen für die Zentrierung auf der Andockstation.

Das Bezugszeichen 63 kennzeichnet einen weiteren optional vorhandenen Multistecker, der beispielsweise elektrische Verbindungen oder auch Fluidverbindungen mit dem mobilen Roboter herstellen kann. Weiterhin kann ein optionaler Spannbolzen oder eine Spanneinrichtung 65 vorgesehen sein, welche ebenfalls zur Arretierung gegenüber einer Dockingstation (nicht gezeigt) dient.

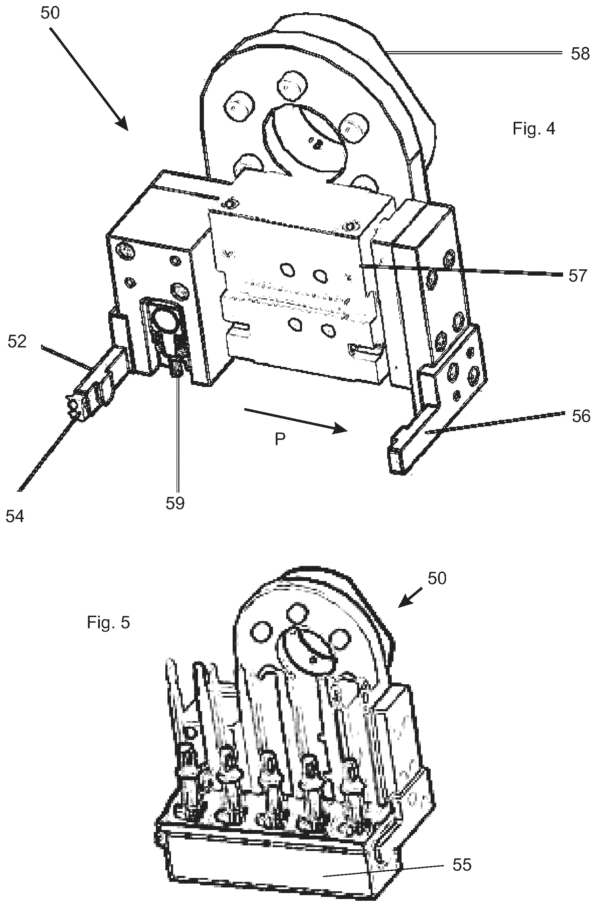

Fig. 4 zeigt eine Darstellung einer Greifeinrichtung 50 für Heizdornen und Abschirmplatten. Dabei kennzeichnet das Bezugszeichen 52 eine feste Greiferbacke, die zum Greifen von Elementen dient. Das Bezugszeichen 54 kennzeichnet einen optional vorhandenen Kontaktsensor, der dazu dient, festzustellen, ob ein Gegenstand wie etwa ein Magazin gehalten wird. Das Bezugszeichen 55 kennzeichnet eine optionale Erfassungseinrichtung, welche dazu geeignet und bestimmt ist, ein gehaltenes Magazin zu identifizieren. Insbesondere kann es sich hierbei um einen RFID-Lesekopf handeln.

Das Bezugszeichen 56 kennzeichnet eine bewegliche Greiferbacke insbesondere eine in Richtung des Pfeils P und auch in der entgegengesetzten Richtung bewegliche Greiferbacke. Auf diese Weise kann ein Gegenstand wie etwa ein Magazin gegriffen werden. Das Bezugszeichen 58 kennzeichnet eine Adaptereinrichtung für das Werkzeugwechselsystem. Mittels dieser Adaptereinrichtung kann der Greifer 50 an einem Roboterarm (nicht gezeigt) befestigt werden.

Das Bezugszeichen 57 kennzeichnet eine Antriebseinrichtung, um die bewegliche Greiferbacke 56 zu bewegen. Insbesondere handelt es sich bei der Antriebseinrichtung um eine pneumatische Antriebseinrichtung. Es wäre jedoch auch die Verwendung einer elektrischen Antriebseinrichtung oder einer magnetischen Antriebseinrichtung möglich.

Fig. 5 zeigt eine Greifeinrichtung 50 mit einer daran angeordneten Magazineinrichtung 55 zum Aufbewahren von Abschirmplatten oder Haltedornen. Die Magazineinrichtung 55 kann in eine Wechselvorrichtung beispielsweise an der Erwärmungseinrichtung eingesetzt und aus dieser entnommen werden.

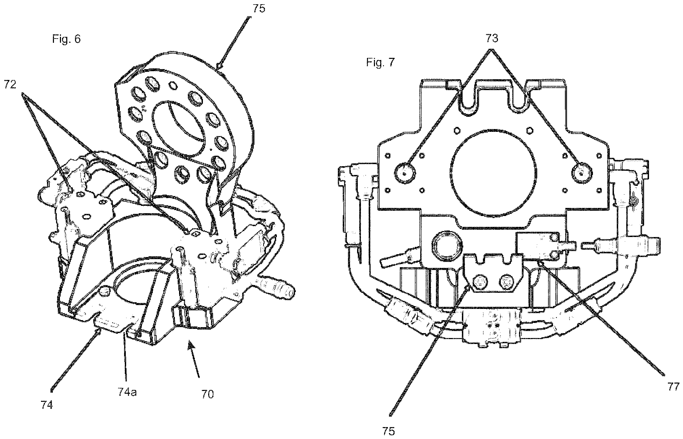

Die Fig. 6 und 7 zeigen eine Greifeinrichtung für Blasformen. Dabei bezieht sich auch hier das Bezugszeichen 75 auf eine Befestigungseinrichtung und insbesondere einen Befestigungsflansch zum Befestigen an einem Roboterarm. Das Bezugszeichen 74 kennzeichnet eine Aufnahmeeinrichtung und insbesondere eine Aufnahmegabel zum Aufnehmen von Blasformen. Die Blasformen können dabei zwei Zapfen oder Vorsprünge aufweisen, welche von den Ausnehmungen dieser Gabeleinrichtung 74 gegriffen werden können.

Die Bezugszeichen 72 kennzeichnen Antriebseinrichtungen zum Greifen oder Bewegen der Gabeleinrichtung.

Fig. 7 zeigt eine Ansicht von unten auf die in Fig. 6 gezeigte Greifeinrichtung. Dabei kennzeichnen die Bezugszeichen 73 Führungseinrichtungen und insbesondere Führungsbolzen, welche zum Greifen von Blasformen dienen. Das Bezugszeichen 75 kennzeichnet eine Halteeinrichtungen und insbesondere eine Halteplatte. Das Bezugszeichen 77 kennzeichnet eine optionale Erfassungseinrichtung zum Erfassen einer Blasform. Dabei kann es sich beispielsweise wieder um einen RFID-Lesekopf handeln.

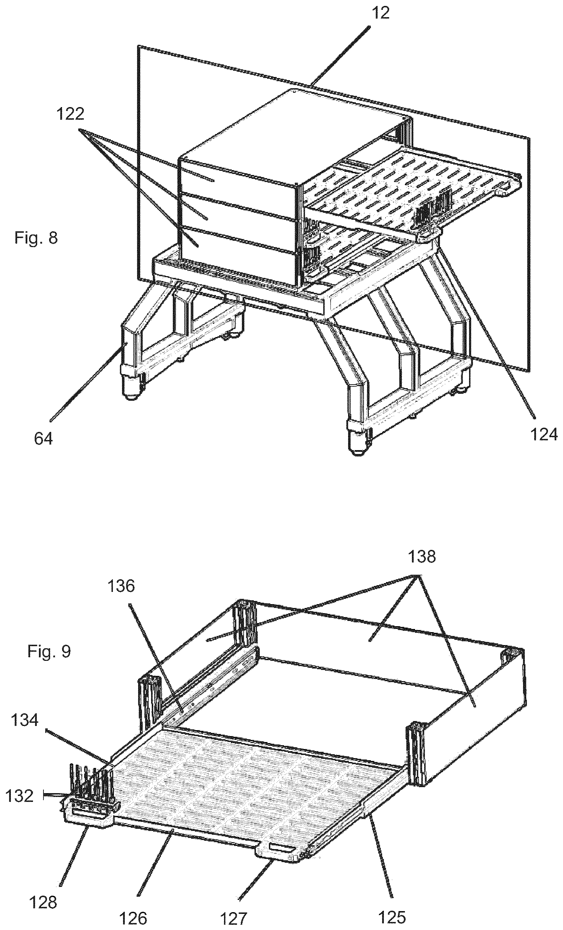

Fig. 8 zeigt eine Darstellung einer Magazineinrichtung 12 zur Aufnahme von Heizdornen und Abschirmplatten. Dabei kennzeichnet das Bezugszeichen 122 Schubmodule, in denen jeweils die wechselbaren Elemente aufbewahrt werden können. Diese Magazineinrichtung 12 ist an einem Träger bzw. einem Transportgestell 64 angeordnet. Das Bezugszeichen 124 kennzeichnet eine Aufnahmeeinrichtung, wobei hier zwei Aufnahmeeinrichtungen (zum Aufnehmen von Abschirmeinrichtungen und/oder Haltedornen) erkennbar sind, welche in dieser Aufnahmeeinrichtung 124 angeordnet sind.

Fig. 9 zeigt eine detailliertere Darstellung einer Aufnahmeeinrichtung 122. Diese weist drei Seitenwände bzw. Abdeckungen 138 auf. Das Bezugszeichen 136 kennzeichnet eine Auszugsschiene, mittels derer eine Platte insbesondere eine Kunststoffplatte 134 verschiebbar ist.

Die Bezugszeichen 127 und 128 kennzeichnen einen Griff, der von einem Benutzer und/oder von einem Roboter gegriffen werden kann. An dieser Stelle ist bevorzugt auch eine Entriegelung zum Entriegeln der Schublade vorgesehen. Daneben sind noch optional Verriegelungen vorgesehen, welche beispielsweise ein Herausziehen der schubladenartigen Gestaltung über einen bestimmten Grad hinaus beschränken bzw. verhindern. Das Bezugszeichen 132 kennzeichnet eine Aufnahme mit Haltedornen und Abschirmplatten. Das Bezugszeichen 125 kennzeichnet eine Auszugschiene mit optionalen Verriegelungen

Fig. 10 zeigt eine Magazineinrichtung 90 für Blasformen (nicht gezeigt). Diese weist eine Vielzahl von Aufnahmeeinrichtungen bzw. Aufnahmeausnehmungen 91 auf, die zum Aufnehmen von Blasformen in einem zusammengesetzten Zustand oder auch zum Aufnehmen von Blasformteilen, wie beispielsweise deren Seitenteilen dienen können. Das Bezugszeichen 64 kennzeichnet wieder den Rahmen bzw. das Gestell, an dem die Magazineinrichtung 90 angeordnet ist. Auf diese Weise kann auch die Magazineinrichtung bewegt werden. Wie oben erwähnt, kann auch dieses Gestell wiederum Trägerelemente oder dergleichen aufweisen, um an einer weiteren Stelle, beispielsweise einer Dockingstation positioniert zu werden.

Fig. 11 zeigt eine Ausgestaltung einer Dockingstation 100, die sich beispielsweise in der Nähe der Umformungseinrichtung oder der Erwärmungseinrichtung befinden kann. Diese Dockingstation kann dabei stationär angeordnet sein. Die Dockingstation 100 weist bevorzugt hier drei Nivellierelemente 102 auf, welche für eine gerade Anordnung oder eine gewünschte Soll-Anordnung einer daran angeordneten Wechseleinrichtung dienen. Das Bezugszeichen 108 kennzeichnet einen Spanntopf, der bevorzugt als pneumatisch aktivierter Spanntopf ausgeführt ist. Das Bezugszeichen 114 kennzeichnet eine Kontaktiereinrichtung, welche beispielsweise elektrische Verbindungen, aber auch gegebenenfalls pneumatische Verbindungen und mechanische Verbindungen herstellt. So kann es sich beispielsweise bei der Kontaktiereinrichtung 114 um einen Multistecker handeln.

Weiterhin sind auch mehrere Zentrierelemente 104 wie beispielsweise Zentrierbuchsen vorgesehen, welche bevorzugt mit entsprechenden Zentrierstiften des Gegenstücks wie etwa des Gestells zusammenwirken, um das Gestell gegenüber der Dockingstation 100 zu zentrieren. Das Bezugszeichen 112 kennzeichnet eine Leiste und insbesondere eine Leiste mit Dreieckskontur wie oben beschrieben. Weiterhin sind optional Antriebseinrichtungen wie Hubeinheiten vorhanden, wobei hier vier Hubeinheiten 106 vorgesehen sind, welche bevorzugt als pneumatische Hubeinheiten ausgebildet sind. Das Bezugszeichen 110 kennzeichnet das Grundgestell der Dockingstation.

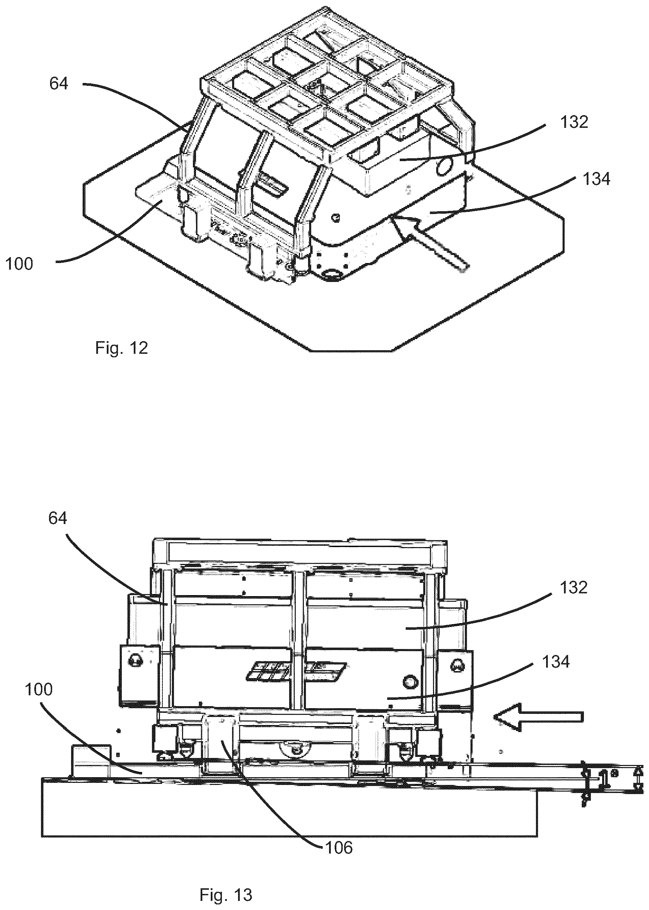

Die nachfolgenden Fig. 12 - 15 veranschaulichen den Ablauf bei einem Dockingvorgang.

Im ersten Schritt wird die angehobene Wechseleinrichtung über der Dockingstation mit 100 Hilfe der Leiste für den Triangle-Drive positioniert (fig. 12). Die Maschinenfüße der Top-Unit können bevorzugt vom Shark maximal ca. 100 mm über den Boden angehoben werden. In Abb. 13 ist außerdem zusätzlich eine Bodenschräge von 1° zuerkennen, welche durch die Dockingstation ausgeglichen werden muss. Das Bezugszeichen 132 kennzeichnet eine Hubeinheit und das Bezugszeichen 134 einen mobilen Roboter (AGV).

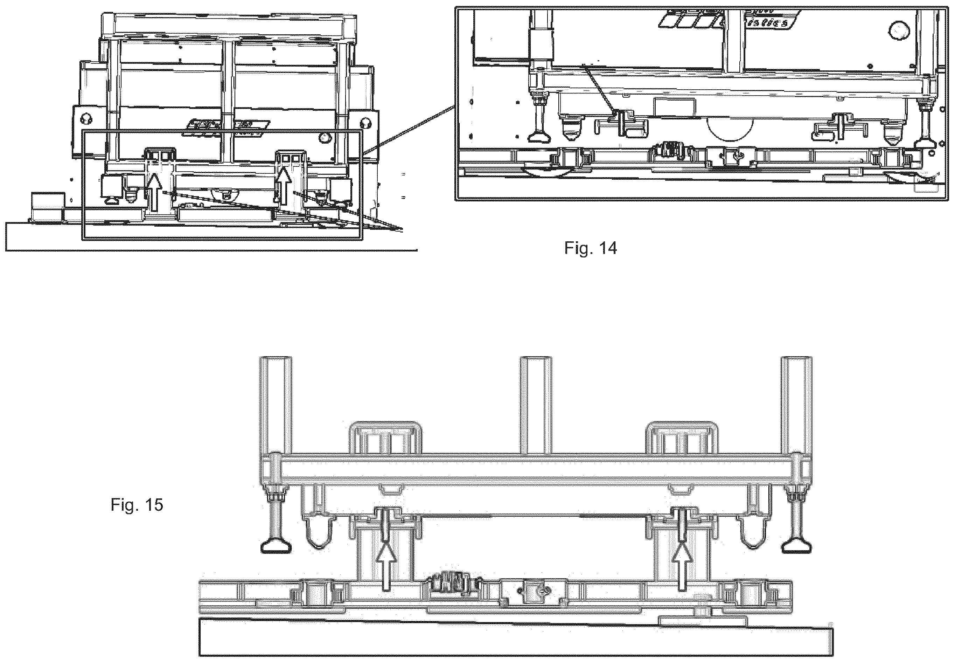

Als nächstes (Fig.14) werden die vier pneumatischen Hubeinheiten 106 nach oben gefahren. In der Schnittansicht in der Abbildung oben sind die Hubbolzen zu erkennen die bevorzugt durch eine Hubkonsole an den Pneumatikzylindern befestigt sind. Jeder Zylinder fährt soweit aus, bis ein Näherungsschalter in den Hubbolzen das Signal zum Halten gibt. Die Hubbolzen befinden sich nun in Spielbuchsen, die an der Unterseite der Top-Unit angebracht sind. Nun kann der Shark die Top-Unit auf die vier Hubbolzen der Dockingstation ablassen. Durch das Spiel der Hubbolzen in den Spielbuchsen entsteht dabei keine Überbestimmtheit. Nach dem Ablassen kann der Shark aus der Dockingstation herausfahren.

In einem dritten Schritt (vgl. Seitenansicht in Fig. 15) werden nun die Hubeinheiten gleichzeitig in die obere Endlage verfahren, damit wird der Winkelversatz von 1° durch die Bodenschräge ausgeglichen. Durch die Hubeinheiten können Verdrehungen um die x- und y-Achse ausgeglichen werden.

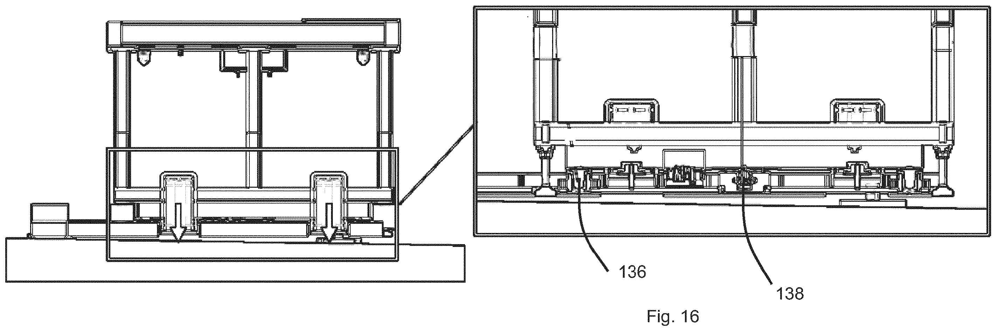

Als nächstes (Fig. 16) werden die Hubeinheiten wieder nach unten gefahren. Dadurch werden die Zentrierbolzen der Top-Unit in die Zentrierbuchsen eingeführt. Da die Hubbolzen Spiel in den Spielbuchsen haben, kann eine Verdrehung der Top-Unit in der z-Achse bzw. ein Versatz der x- und y-Achse ausgeglichen werden.

Bei den Dockingstationen für die Roboter Top-Unit werden bevorzugt durch das weitere Ablassen auch die Spannbolzen 138 der Top-Unit in die Spanntöpfe eingeführt. Außerdem schließen sich bevorzugt die Kontakte des Multisteckers. Als letztes werden nun die Spanntöpfe betätigt, um eine kraftschlüssige Verbindung zwischen der Dockingstation und der Roboter Top-Unit herzustellen. Damit ist der Dockingvorgang abgeschlossen. Beim Übergeben einer Top-Unit an den mobilen Roboter wird die Top-Unit durch die Hubeinheiten ausgehoben und auf den vorpositionierten Shark abgelassen.

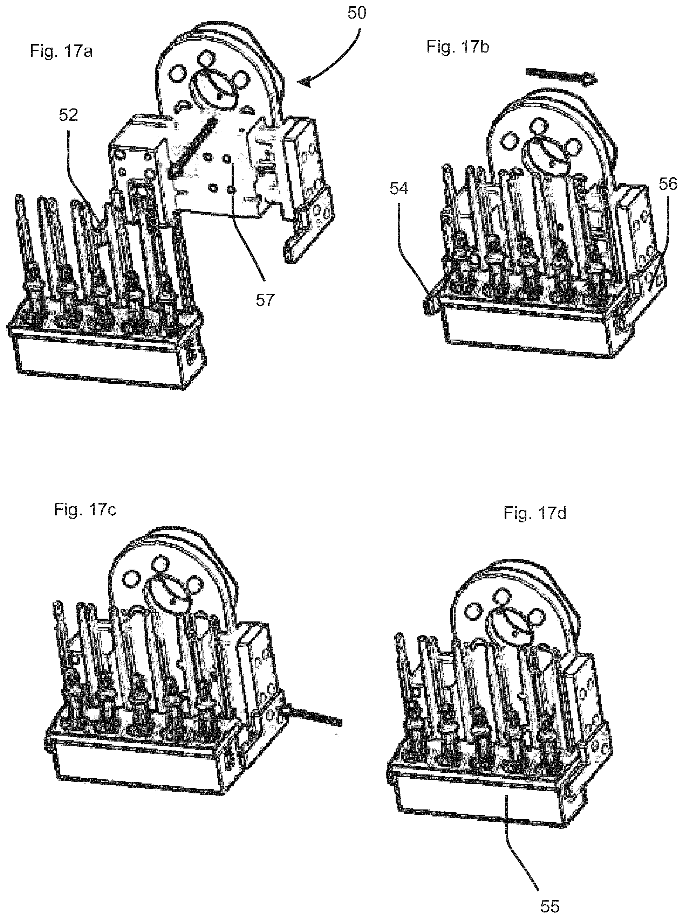

Die Fig. 17a - 17d veranschaulichen das Greifen von Heizdornen und Abschirmplatten. Zunächst wird die Greifeinrichtung 50 durch den Roboter der Wechseleinrichtung 6 (nicht gezeigt) positioniert (vgl. Fig. 17a). Die feste Greiferbacke 52 wird vom Roboter an die Aufnahme herangefahren, bis der Kontaktsensor 54 dass Signal für den Kontakt gibt (Fig. 17b). Die bewegliche Greiferbacke 56 wird durch den pneumatischen Zylinder 57 an die Aufnahme gefahren. So entsteht eine kraft- und formschlüssige Verbindung (Fig. 17c). Die Aufnahme ist nun gegriffen und kann vom Roboter bewegt werden.

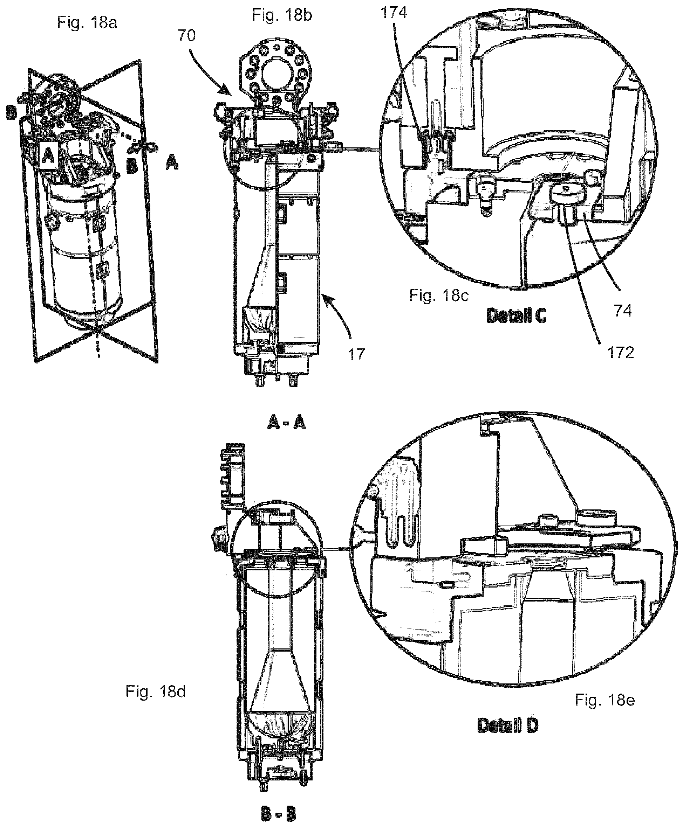

Die Fig. 18a - 18e zeigen das Greifen von Blasformen. In Fig. 18a und 18b ist eine Greifeinrichtung mit einer aufgenommenen Blasform dargestellt. Die Figuren 18b - 18e zeigen Schnittdarstellungen bzw. Details. Beim Greifen einer Blasform wird zunächst die Gabel 74 der Greifeinrichtung in speziell dafür vorgesehene Bolzen an der Oberseite der Blasform eingefädelt (vgl. Detail C). Ebenso wird die Halteplatte an der Rückseite der Blasform in zwei Stifte (nicht gezeigt) eingeführt (vgl. Detail D). So wird ein Auseinanderklappen der Blasformenhälften während der Bewegung des Roboters verhindert.

Die Führungsbolzen 174, die an der Kolbenstange der Pneumatikzylindern befestigt sind, werden durch diese nach unten gedrückt (vgl. Detail C). Dadurch entsteht eine kraftschlüssige Verbindung. Durch den Eingriff der kegelförmigen Führungsbolzen in die Kopfplatte der Blasform entsteht zusätzlich auch ein Formschluss. Der Boden der Blasform ist so mit ihren Seitenteilen verbunden, dass dieser nur bei einem Auseinanderklappen der Blasform herausfallen kann. So kann die gesamte Blasform gegriffen und vom Transportmagazin mit Hilfe des Roboters entnommen und in die jeweilige Blasstation in der Blasmaschine eingesetzt werden.

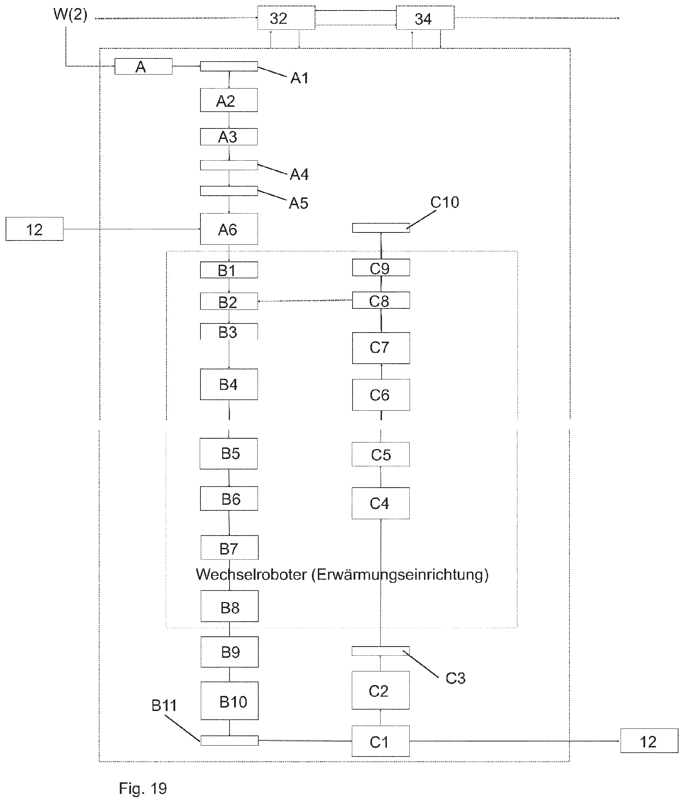

Fig. 19 veranschaulicht einen Verfahrensablauf W(2) bei Wechseln von Heizdornen und/oder Abschirmplatten. In dem Verfahrensschritt A wird ein Sicherheitsbereich hergestellt.

Vor der Aufnahme der Wechseleinrichtung wird bevorzugt durch einen Scanner, beispielsweise einen Laserscanner, ein Sicherheitsbereich definiert. Sobald ein Bediener den Sicherheitsbereich betritt, wird die Aufnahme der Wechseleinrichtung unterbrochen, bzw. wird ein NOT-HALT ausgelöst.

Der Scanner ist bevorzugt an dem mobilen Träger (AGV) oder stationär an der Maschine, z.B. an der Dockingstation, angeordnet. Bevorzugt können auch mehrere Scanner zum Einsatz kommen, wobei bevorzugt mindestens ein erster Scanner stationär und mindestens ein zweiter Scanner mobil angeordnet ist.

In den bevorzugten Schritten wird eine Wechseleinrichtung, d.h. die Wechselrobotereinheit aufgenommen (A1) und in eine Arbeitsposition transportiert (Schritt A2). Falls nötig, wird die Wechselrobotereinheit positioniert (Schritt A3) und abgesetzt (Schritt A4). In einem weiteren Schritt wird ggfs. eine Greifeinrichtung (welche für das Handling der Heizdorne oder Abschirmplatten dient) verbunden bzw. angekoppelt (Schritt A5). In einem optionalen Schritt A6 wird die Transporteinheit und/oder die Magazinvorrichtung 12 für die Heizdorne und/oder Abschirmplatten geprüft.

Die nachfolgenden Schritte befassen sich mit dem eigentlichen Wechselvorgang. Hierbei wird bevorzugt zunächst eine Abdeckung der Erwärmungseinrichtung geöffnet (Schritt B1) und die Transporteinrichtung, insbesondere eine umlaufende Kette positioniert (Schritt B2). Bevorzugt werden die Heizdorne bewegt, beispielsweise nach unten gedrückt (Schritt B3). In einem weiteren Schritt wird die Magazinvorrichtung bzw. die Aufnahme für die Heizdorne und Abschirmplatten positioniert (Schritt B4).

In einem weiteren Schritt werden bevorzugt die Abschirmplatten und/oder Heizdorne an der Magazineinrichtung arretiert (Schritt B5). Falls vorhanden, wird ein Verschluss und insbesondere ein Schnellverschluss der Abschirmplatten gelöst (Schritt B6). Anschließend können die Heizdorne und/oder Abschirmplatten gelöst, beispielsweise nach unten abgezogen werden (Schritt B7). Schließlich wird bevorzugt die Arretierung der Heizdorne und Abschirmplatten gelöst (Schritt B8).

In einem weiteren Verfahrensschritt B9 werden die Heizdorne und/oder Abschirmplatten in der Wechseleinrichtung gegriffen und bevorzugt in die Magazineinrichtung und/oder in eine Zwischenablage transportiert (Schritt B10). Optional werden in einem weiteren Schritt B11 die einzelnen Greifer gelöst und die (insbesondere einzuwechselnden) Heizdorne und/oder Abschirmplatten aus der Magazineinrichtung gegriffen (Schritt C1) und bevorzugt in einer Aufnahme der Wechseleinrichtung gegriffen (Schritt C2). Anschließend werden bevorzugt die jeweiligen Greifer gelöst (Schritt C3).

In einem optionalen Schritt C4 werden die Heizdorne und/oder Abschirmplatten an der Wechseleinrichtung bzw. dem Roboter arretiert und anschließend an der Transporteinrichtung angeordnet, beispielsweise in eine Ofenkette eingesteckt (Schritt C5). Bevorzugt wird anschließend eine Arretierung der Heizdorne und/oder Abschirmplatten gelöst (Schritt C6) und eine Aufnahme ohne die Heizdorne und/oder Abschirmplatten bewegt und insbesondere abgesenkt (Schritt C7) In einem weiteren Schritt wird geprüft, ob der Wechsel vollständig ist (Schritt C8). Ist dies nicht der Fall, wird erneut die Transporteinrichtung positioniert (Schritt B2). Ist der Wechsel vollständig, wird bevorzugt die Abdeckung der Ofeneinrichtung geschlossen (Schritt C9) und schließlich werden die Greifer (insbesondere von der Wechseleinrichtung) getrennt (Schritt C10).

Zur Durchführung des Wechsels werden bevorzugt entsprechende Befehle an die Anlage 32 und insbesondere an die Steuer- und/oder Regeleinheit der Blasformmaschine und/oder der Erwärmungseinrichtung ausgegeben. Entsprechend werden bevorzugt auch Befehle an eine Steuer- und/oder Regeleinrichtung 34 der Wechseleinrichtung ausgegeben.

Allgemeiner formuliert läuft der Wechsel wie folgt ab: Die Top-Unit bzw. ein Wechselroboter muss zunächst an die Position am Heizmodul transportiert und abgesetzt werden. Die Transporteinheit 12 mit den Heizdornen und Abschirmplatten und/oder der Wechselaufsatz kann schon vor dem Wechselvorgang an der Stelle der Applikation transportiert werden.

Es wird bevorzugt geprüft, welcher Greifer mit dem Roboter verbunden bist. Gegebenenfalls wird der Greifer gewechselt, so dass der Greifer zum Wechseln der Heizdorne und Abschirmplatten mit dem Roboter verbunden ist. Anschließend wird durch diesen die Transporteinheit geöffnet und die darin enthaltenen Rüstteile können bei Bedarf durch eine Sensoreinrichtung, insbesondere den RFID-Lesekopf geprüft werden.

Im Folgenden werden die Heizdorne und Abschirmplatten automatisch durch die bewegliche Transporteinrichtung, insbesondere Ofenkette im Wechselautomaten platziert, dieser entnimmt diese und stellt sie in einer Aufnahme ab. Die Aufnahme wird anschließend vom Automaten so positioniert, dass diese durch den Roboter gegriffen werden kann.

Die Aufnahme mit vorzugsweise fünf Heizdornen und Abschirmplatten wird vom Greifer, wie oben beschrieben, gegriffen und anschließend durch den Roboter an eine freie Position in der oben beschriebenen Transporteinheit positioniert. Nun wird Greifer geöffnet und die Aufnahme so in die Transporteinheit abgestellt.

Danach wird eine mit den "neuen" Heizdornen und Abschirmplatten, in der Transportheit lagernde, Aufnahme durch den Greifer aufgenommen. Diese wird im Wechselautomaten positioniert und der Greifer löst sich.

Durch den Wechselautomaten werden nun die Heizdorne und Abschirmplatten wieder an der Transporteinrichtung, insbesondere einer Ofenkette montiert. Die Ofenkette wird nun weiter verfahren, so dass die nächsten fünf zu wechselnden Heizdorne und Abschirmplatten im Wechselautomaten positioniert werden. Allgemein werden daher bevorzugt mehrere Wechselelemente, insbesondere Heizdorne und/oder Abschirmplatten in einem Arbeitsschritt gewechselt.

Der Vorgang wird dann bevorzugt so lange wiederholt, bis alle Heizdorne und Abschirmplatten, die in einem Schubmodul lagern und/oder die an der Transporteinrichtung anzuordnen sind gewechselt worden sind. Dann wird das Schubmodul durch den Greifer und den Roboter geschlossen und anschließend das nächste Schubmodul geöffnet. Aus dem neu geöffneten Schubmodul werden nun wieder mehrere und bevorzugt alle Heizdorne und Abschirmplatten im oben beschriebenen Schema gewechselt. Die Vorgänge wiederholen sich bevorzugt so lange, bis alle Heizdorne und Abschirmplatten, die in der Transporteinheit lagern gewechselt sind. Als letztes werden bevorzugt die Top-Unit und die Transporteinheit an ihren Lagerort transportiert und abgesetzt.

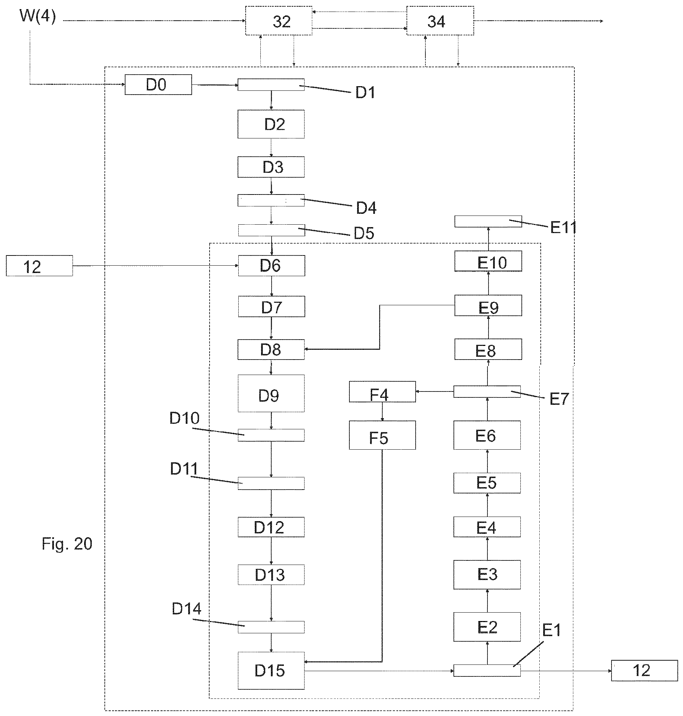

Fig. 20 veranschaulicht einen Wechsel W(4) von Blasformen. In dem Verfahrensschritt D0 wird ein Sicherheitsbereich hergestellt. In den bevorzugten Schritten wird eine Wechseleinrichtung, d.h. die Wechselrobotereinheit aufgenommen (Schritt D1) und in eine Arbeitsposition transportiert (Schritt D2). Falls nötig, wird die Wechselrobotereinheit positioniert (Schritt D3) und abgesetzt (Schritt D4). In einem weiteren Schritt wird ggfs. eine Greifeinrichtung (welche für das Handling der Heizdorne oder Abschirmplatten dient) verbunden bzw. angekoppelt (Schritt D5).

In einem weiteren bevorzugten Schritt D6 wird der Transport von Wechselelementen der Umformungseinrichtung (im Folgenden wird beispielhaft von den Blasformen gesprochen) geprüft. In einem Schritt D7 wird ein Schutz der Umformungseinrichtung geöffnet und die Blasformenträger werden transportiert (Schritt D8). Weiterhin wird bevorzugt eine Zentrierung und/oder Luftversorgung der Blasformträger hergestellt (Schritt D9) und eine Blasform gegriffen (Schritt D10).

Anschließend wird die Blasform gegriffen (Schritt D11), die Blasform (insbesondere von ihrem Blasformträger) entriegelt (Schritt D12) und der Blasformträger geöffnet (Schritt D13). Die Blasform wird entnommen (Schritt D14) und bevorzugt (insbesondere, wenn das Blasformenmagazin vollständig gefüllt ist) in eine Zwischenablage transportiert und/oder dort positioniert. Weiterhin wird bevorzugt eine Greifeinrichtung (welche die Blasformen greift) gelöst (Schritt E1) und eine Blasform aus der Magazineinrichtung gegriffen (Schritt E2).

Die (neue, einzuwechselnde) Blasform wird in dem Blasformträger positioniert (Schritt E3) und anschließend wird der Blasformträger geschlossen (Schritt E4) und bevorzugt verriegelt (Schritt E5). In einem weiteren Schritt wird die Blasform in bzw. an dem Blasformträger verriegelt (Schritt E6) und die Greifeinrichtung, welche die Blasform greift, gelöst (Schritt E7).

In einem weiteren Schritt wird die Zwischenablage geprüft (Schritt F4) und falls sich dort noch Blasformen befinden, wird eine weitere Blasform gegriffen (Schritt F5) und die Schritte ab D15 wiederholen sich.

Falls sich keine Blasform mehr in der Zwischenablage befindet wird die Zentrierung und/oder die Luftversorgung gelöst (Schritt E8) und geprüft, ob der Wechsel vollständig ist (Schritt E9). Falls der Wechsel nicht vollständig ist, wird ausgehend von Schritt D8 wiederholt. Falls der Wechsel vollständig ist, wird der Schutz der Umformungseinrichtung geschlossen (Schritt E10). Schließlich werden optional die Greifeinrichtungen von dem Wechselroboter getrennt. Zusammengefasst stellt sich der Wechsel von Wechselelementen der Umformungseinrichtung wie folgt dar: Die Top-Unit bzw. der Wechselroboter wird zunächst an die Position an der Umformungseinrichtung transportiert und abgesetzt werden. Die Transporteinheit mit den Blasformen kann schon vor dem Wechselvorgang an der Stelle der Applikation transportiert werden.

Es wird geprüft, welche Greifeinrichtung mit dem Roboter verbunden bist. Gegebenenfalls wird der Greifer gewechselt, so dass der Greifer zum Wechseln der Blasformen mit dem Roboter, insbesondere einem Knickarmroboter verbunden ist. Anschließend wird durch diesen die Transporteinheit für Blasformen durch eine Sensoreinrichtung, beispielsweise den RFID-Lesekopf geprüft. An der Blasmaschine öffnet sich bevorzugt automatisch eine Verschließeinrichtung, etwa ein Rolltor, so dass der Knickarmroboter in die Blasmaschine eingreifen kann.

Ein Blasformträger einer Umformungsstation in der Umformungseinrichtung wird so positioniert, dass der Roboter diesen erreichen kann. Der Blasformträger wird in der Blasmaschine (bevorzugt automatisch und/oder pneumatisch) ausgerichtet und insbesondere zentriert. Der Robotergreifer greift die Blasform im Blasformträger. Die Blasform wird im Blasformträger (bevorzugt pneumatisch) entriegelt. Der Blasformträger öffnet sich, so dass die Blasform entnommen werden kann. Die Blasform kann nun durch den Knickarmroboter der Wechseleinrichtung aus der Umformungsmaschine entnommen werden und in die Transporteinheit für die Blasformen abgestellt.

Die Greifeinrichtung bewegt sich weg von der abgelegten Blasform und positioniert sich über einer neuen Blasform im Blasformenmagazin. Die Blasform wird gegriffen und aus der Transporteinheit durch den Wechselroboter herausgehoben. Sie wird bevorzugt im Blasformenträger positioniert. Der Blasformträger wird geschlossen und anschließend pneumatisch verriegelt. Die kraft- und/oder formschlüssige Verbindung der Greifeinrichtung wird gelöst. Der Greifer kann nun durch den (Knickarm)roboter vom Blasformenträger wegbewegt werden. Die (bevorzugt pneumatische) Zentrierung des Blasformenträgers wird bevorzugt gelöst.

Die Vorgänge wiederholen sich so lange, bis alle Blasformen gewechselt sind.

Als letztes werden der Wechselroboter und die Transporteinheit an ihren Lagerort transportiert und abgesetzt.

Die Erfindung bietet zahlreiche Vorteile. So wird ein Automatischer Wechsel von Wechselelementen wie insbesondere Heizdornen und Abschirmplatten und Blasformen ermöglicht. Die Dauer zum Umbau der Umformungseinrichtung, etwa einer Blasmaschine bei einer Änderung des Mündungsdurchmessers von Behältern/Preforms wird deutlich verkürzt. Auf diese Weise können Stillstandzeiten an Abfüll- und Verpackungsanlagen deutlich reduziert werden. Weiterhin ist es durch die Erfindung auch möglich, eine hohe Auslastung eines Knickarmroboters zu erzielen. Bevorzugt ist ein Wechselaufsatz mit Knickarmroboter nutzbar zum Wechseln der Blasformen, Heizdorne und Abschirmplatten an einer oder mehreren Maschinen und für andere Applikationen auch an anderen Maschinen (z.B. Etikettenrollenwechsel).

Die beschriebene Dockingstation kann auch für andere Applikationen, z.B. in der Materialversorgung genutzt werden.

## Patentansprüche

1. Anlage (1) zum Herstellen von Kunststoffbehältnissen (20) mit einer Erwärmungseinrichtung (2) zum Erwärmen von Kunststoffvorformlingen (10), wobei diese Erwärmungseinrichtung eine Transporteinrichtung (22) zum Transportieren von Kunststoffvorformlingen (10) entlang eines vorgegebenen ersten Transportpfads (P1) aufweist sowie eine Vielzahl von Halteeinrichtungen (24) zum Halten der Kunststoffvorformlinge (10) und wenigstens eine Erwärmungseinheit (25), welche die Kunststoffvorformlinge während ihres Transports erwärmen und mit einer Umformungseinrichtung (4) zum Umformen der Kunststoffvorformlinge zu Kunststoffbehältnissen, welche dazu geeignet ist, die von der Erwärmungseinrichtung (2) erwärmten Kunststoffvorformlinge durch Beaufschlagung mit einem fließfähigen Medium zu expandieren, wobei die Umformungseinrichtung eine Vielzahl von Umformungsstationen aufweist, welche die Kunststoffvorformlinge zu den Kunststoffbehältnissen umformen und wobei sowohl die Erwärmungseinrichtung (2) als auch die Umformungseinrichtung (4) wechselbare Elemente aufweisen,
**dadurch gekennzeichnet, dass**
die Anlage eine Wechseleinrichtung (6) aufweist, welche dazu geeignet ist, sowohl wechselbare Elemente der Erwärmungseinrichtung als auch wechselbare Elemente (44) der Umformungseinrichtung zu wechseln, wobei die Wechseleinrichtung - insbesondere durch einen mobilen Roboter - zwischen wenigstens zwei verschiedenen Positionen bewegbar ist.

2. Anlage (1) nach Anspruch 1,
**dadurch gekennzeichnet, dass**
die Wechseleinrichtung (6) zwischen einer ersten Position (A), in der sie zum Wechseln von wechselbaren Elementen der Erwärmungseinrichtung (2) positioniert ist und einer zweiten Position (B) in der sie zum Wechseln von wechselbaren Elementen der Umformungseinrichtung (4) positioniert ist, bewegbar ist.

3. Anlage nach wenigstens einem der vorangegangenen Ansprüche,
**dadurch gekennzeichnet, dass**
die Anlage eine weitere Transporteinrichtung (8) aufweist, welche die erwärmten Kunststoffvorformlinge von der Erwärmungseinrichtung zu der Umformungseinrichtung (4) transportiert, wobei bevorzugt diese weitere Transporteinrichtung wenigstens einen Transportstern aufweist.

4. Anlage nach wenigstens einem der vorangegangenen Ansprüche,
**dadurch gekennzeichnet, dass**
die wechselbaren Elemente der Erwärmungseinrichtung aus einer Gruppe von wechselbaren Elementen ausgewählt sind, welche Greifklammer, Haltedorne, Abschirmplatten zur Hitzeabschirmung und dergleichen enthält und/oder die wechselbaren Elemente der Umformungseinrichtung aus einer Gruppe von Elementen ausgewählt ist, welche Greifklammern, Blasformen, Blasformteile, Reckstangen, Blasdüsen und dergleichen enthält.

5. Anlage nach wenigstens einem der vorangegangenen Ansprüche,
**dadurch gekennzeichnet, dass**
die Wechseleinrichtung wenigstens eine Greifeinrichtung (50) zum Greifen des wechselbaren Elements aufweist.

6. Anlage nach wenigstens einem der vorangegangenen Ansprüche,
**dadurch gekennzeichnet, dass**
die Wechseleinrichtung mit wenigstens zwei unterschiedlichen Greifeinrichtungen bestückbar ist, wobei bevorzugt eine der Greifeinrichtungen um Wechseln eines wechselbaren Elements der Erwärmungseinrichtung (2) bestimmt ist und die andere der Greifeinrichtungen zum Wechseln eines wechselbaren Elements der Umformungseinrichtung (4) bestimmt ist.

7. Anlage nach wenigstens einem der vorangegangenen Ansprüche,
**dadurch gekennzeichnet, dass**
die Wechseleinrichtung (6) einen mobilen Träger (64) aufweist, an dem eine Robotereinrichtung (62) angeordnet ist.

8. Anlage nach wenigstens einem der vorangegangenen Ansprüche,
**dadurch gekennzeichnet, dass**
die Anlage wenigstens eine Magazineinrichtung (12) zur Aufbewahrung von wechselbaren Elementen aufweist, wobei diese Magazineinrichtung bevorzugt mobil ist.

9. Anlage nach wenigstens einem der vorangegangenen Ansprüche,
**dadurch gekennzeichnet, dass**
die Anlage wenigstens eine stationäre Dockingstation aufweist, an der wenigstens zeitweise wenigstens ein Bestandteil der Wechseleinrichtung anordenbar ist.

10. Anlage nach wenigstens einem der vorangegangenen Ansprüche,
**dadurch gekennzeichnet, dass**
die Anlage wenigstens eine Identifikationseinrichtung aufweist, um wenigstens ein wechselbares Element zu identifizieren und/oder wenigstens eine Erfassungseinrichtung, welche eine Positionsbestimmung wenigstens eines Elements der Wechseleinrichtung ermöglicht.

11. Verfahren zum Betrieben einer Anlage zum Herstellen von Kunststoffbehältnissen, wobei in einem Arbeitsbetrieb der Anlage Kunststoffvorformlinge mit einer Erwärmungseinrichtung (2) erwärmt werden und wobei eine Transporteinrichtung (22) die Kunststoffvorformlinge (10) entlang eines vorgegebenen ersten Transportpfads (P1) transportiert sowie eine Vielzahl von Halteeinrichtungen (24) die Kunststoffvorformlinge hält und wenigstens eine Erwärmungseineinheit die Kunststoffvorformlinge während ihres Transports erwärmt und wobei weiterhin eine Umformungseinrichtung (4) die von der Erwärmungseinrichtung (2) erwärmten Kunststoffvorformlinge durch Beaufschlagung mit einem fließfähigen Medium expandiert und so zu den Kunststoffbehältnissen umformt, wobei die Umformungseinrichtung eine Vielzahl von Umformungsstationen aufweist, welche die Kunststoffvorformlinge zu den Kunststoffbehältnissen umformen und wobei sowohl die Erwärmungseinrichtung (2) als auch die Umformungseinrichtung (4) wechselbare Elemente aufweisen,
**dadurch gekennzeichnet, dass**
in einem Wechselbetrieb eine Wechseleinrichtung (6) sowohl wechselbare Elemente der Erwärmungseinrichtung als auch wechselbare Elemente (44) der Umformungseinrichtung wechselt, wobei die Wechseleinrichtung -insbesondere durch einen mobilen Roboter - zwischen wenigstens zwei verschiedenen Positionen bewegt wird.

12. Verfahren nach dem vorangegangenen Anspruch,
**dadurch gekennzeichnet, dass**
auch die Wechseleinrichtung mit unterschiedlichen Greifeinrichtungen ein und/oder Wechseleinheiten ausgestattet wird, um den Wechsel von wechselbaren Elementen der Umformungseinrichtung und den Wechsel von wechselbaren Elementen der Erwärmungseinrichtung durchzuführen.

13. Verfahren nach wenigstens einem der vorangegangenen Ansprüche,
**dadurch gekennzeichnet, dass**
wenigstens zeitweise die Wechseleinrichtung oder Bestandteile der Wechseleinrichtung von einer ersten Position (A), die zum Wechseln von wechselbaren Elementen der Umformungseinrichtung dient in eine zweite Position (B), die zum Wechseln von wechselbaren Elementen der Erwärmungseinrichtung dient, bewegt wird.

14. Verfahren nach wenigstens einem der vorangegangenen Ansprüche,
**dadurch gekennzeichnet, dass**
wechselbare Elemente wenigstens zeitweise in einer Magazineinrichtung abgelegt werden und bevorzugt auch diese Magazineinrichtung wenigstens zeitweise in unterschiedliche Positionen bewegt wird.

15. Verfahren nach wenigstens einem der vorangegangenen Ansprüche,
**dadurch gekennzeichnet, dass**
wenigstens zeitweise die Wechseleinrichtung oder ein Bestandteil der Wechseleinrichtung an einer Dockingstation positioniert und/oder befestigt wird.

## Claims

1. A system (1) for producing plastic containers (20) with a heating device (2) for heating plastic preforms (10), wherein said heating device having a transport device (22) for transporting plastic preforms (10) along a predetermined first transport path (P1), and a plurality of holding devices (24) for holding the plastic preforms (10) and at least one heating unit (25) which heats the plastic preforms during the transport thereof and comprising a forming device (4) for forming the plastic preforms into plastic containers, said forming device being suitable for expanding the plastic preforms heated by the heating device (2) by applying a flowable medium, wherein the forming device has a plurality of forming stations which form the plastic preforms to the plastic containers, and wherein both the heating device (2) and the forming device (4) have changeable elements,
**characterized in that**
the system has a changing device (6) which is suitable for changing both changeable elements of the heating device and changeable elements (44) of the forming device, wherein the changing device is movable between at least two different positions in particular by a mobile robot.

2. The system according to claim 1,
**characterized in that**
the changing device (6) is movable between a first position (A), in which it is positioned for changing changeable elements of the heating device (2) and a second position (B), in which it is positioned for changing changeable elements of the forming device (4).

3. The system according to at least one of the preceding claims,
**characterized in that**
the system has a further transport device (8) which transports the heated plastic preforms from the heating device to the forming device (4), wherein preferably this further transport device has at least one transport starwheel.

4. The system according to at least one of the preceding claims,
**characterized in that**
the changeable elements of the heating device are selected from a group of changeable elements which includes gripping clamps, holding mandrels, shielding plates for heat shielding and the like, and/or the changeable elements of the forming device are selected from a group of elements which includes gripping clamps, blow molds, blow mold parts, stretching rods, blow nozzles and the like.

5. The system according to at least one of the preceding claims,
**characterized in that**
the changing device has at least one gripping device (50) for gripping the changeable element.

6. The system according to at least one of the preceding claims,
**characterized in that**
the changing device can be equipped with at least two different gripping devices, wherein preferably one of the gripping devices is intended for changing a changeable element of the heating device (2) and the other of the gripping devices is intended for changing a changeable element of the forming device (4).

7. The system according to at least one of the preceding claims,
**characterized in that**
the changing device (6) has a mobile carrier (64) on which there is arranged a robot device (62).

8. The system according to at least one of the preceding claims,
**characterized in that**
the system comprises at least one magazine device (12) for storing changeable elements, wherein this magazine device is preferably mobile.

9. The system according to at least one of the preceding claims,
**characterized in that**
the system has at least one stationary docking station, on which at least one component of the changing device can be arranged at least temporarily.

10. The system according to at least one of the preceding claims,
**characterized in that**
the system has at least one identification device in order to identify at least one changeable element and/or at least one detection device which enables a position determination of at least one element of the changing device.

11. A method for operating a system for producing plastic containers, wherein plastic preforms are heated with a heating device (2) in a working mode of the system, and wherein a transport device (22) transports the plastic preforms (10) along a predetermined first transport path (P1), and a plurality of holding devices (24) hold the plastic preforms, and at least one heating unit heats the plastic preforms during their transport, and wherein furthermore a forming device (4) expands the plastic preforms heated by the heating device (2) by applying a flowable medium and thus forms them to the plastic preforms, wherein the forming device has a plurality of forming stations, which form the plastic preforms to the plastic containers, and wherein both the heating device (2) and the forming device (4) have changeable elements,
**characterized in that**
a changing device (6) changes both changeable elements of the heating device and changeable elements (44) of the forming device in a changing mode, wherein the changing device is moved between at least two different positions in particular by a mobile robot.

12. The method according to the preceding claim,
**characterized in that**
the changing device is also equipped with different gripping devices and/or changing units in order to carry out the change of changeable elements of the forming device and the change of changeable elements of the heating device.

13. The method according to at least one of the preceding claims,
**characterized in that**
the changing device or components of the changing device are at least temporarily moved from a first position (A), which serves to change changeable elements of the forming device, into a second position (B), which serves for changing changeable elements of the heating device.

14. The method according to at least one of the preceding claims,
**characterized in that**
changeable elements are stored at least temporarily in a magazine device and preferably this magazine device is also moved at least temporarily into different positions.

15. The method according to at least one of the preceding claims,
**characterized in that**
the changing device or a component of the changing device is at least temporarily positioned and/or fastened to a docking station.

## Revendications

1. Installation (1) de fabrication de récipients en matière plastique (20) avec un dispositif de chauffage (2) destiné à chauffer des préformes en matière plastique (10), dans laquelle ledit dispositif de chauffage présente un dispositif de transport (22) destiné à transporter des préformes en matière plastique (10) le long d'un premier trajet de transport (P1) prédéfini ainsi qu'une pluralité de dispositifs de maintien (24) destinés à maintenir les préformes en matière plastique (10) et au moins une unité de chauffage (25), qui chauffe les préformes en matière plastique pendant leur transport, et avec un dispositif de façonnage (4) destiné à façonner les préformes en matière plastique en des récipients en matière plastique, qui est adapté pour dilater les préformes en matière plastique chauffées par le dispositif de chauffage (2) par exposition à un milieu fluide, dans laquelle le dispositif de façonnage présente une pluralité de stations de façonnage, qui façonnent les préformes en matière plastique en les récipients en matière plastique et dans laquelle à la fois le dispositif de chauffage (2) et le dispositif de façonnage (4) présentent des éléments interchangeables,
**caractérisée en ce que**
l'installation présente un dispositif de changement (6) qui est adapté pour changer à la fois des éléments interchangeables du dispositif de chauffage et des éléments interchangeables (44) du dispositif de façonnage, dans laquelle le dispositif de changement peut être déplacé - en particulier par un robot mobile - entre au moins deux positions différentes.

2. Installation (1) selon la revendication 1,
**caractérisée en ce que**
le dispositif de changement (6) peut être déplacé entre une première position (A), dans laquelle il est positionné pour changer des éléments interchangeables du dispositif de chauffage (2), et une deuxième position (B), dans laquelle il est positionné pour changer des éléments interchangeables du dispositif de façonnage (4).

3. Installation selon au moins l'une quelconque des revendications précédentes,
**caractérisée en ce que**
l'installation présente un autre dispositif de transport (8) qui transporte les préformes en matière plastique chauffées du dispositif de chauffage vers le dispositif de façonnage (4), dans laquelle de manière préférée ledit autre dispositif de transport présente au moins une étoile de transport.

4. Installation selon au moins l'une quelconque des revendications précédentes,
**caractérisée en ce que**
les éléments interchangeables du dispositif de chauffage sont choisis parmi un groupe d'éléments interchangeables qui contient des pinces de préhension, des mandrins de maintien, des plaques de blindage thermique et similaires et/ou les éléments interchangeables du dispositif de façonnage sont choisis parmi un groupe d'éléments, qui contient des pinces de préhension, des moules de soufflage, des pièces moulées par soufflage, des barres d'étirement, des buses de soufflage et similaires.

5. Installation selon au moins l'une quelconque des revendications précédentes,
**caractérisée en ce que**
le dispositif de changement présente au moins un dispositif de préhension (50) pour saisir l'élément interchangeable.

6. Installation selon au moins l'une quelconque des revendications précédentes,
**caractérisée en ce que**
le dispositif de changement peut être équipé d'au moins deux dispositifs de préhension différents, dans laquelle de manière préférée un des dispositifs de préhension se destine à changer un élément interchangeable du dispositif de chauffage (2) et l'autre des dispositifs de préhension se destine à changer un élément interchangeable du dispositif de façonnage (4).

7. Installation selon au moins l'une quelconque des revendications précédentes,
**caractérisée en ce que**
le dispositif de changement (6) présente un support mobile (64) sur lequel est disposé un dispositif robotisé (62).

8. Installation selon au moins l'une quelconque des revendications précédentes,
**caractérisée en ce que**
l'installation présente au moins un dispositif de magasin (12) pour le stockage d'éléments interchangeables, dans laquelle ledit dispositif de magasin est de manière préférée mobile.

9. Installation selon au moins l'une quelconque des revendications précédentes,
**caractérisée en ce que**
l'installation présente au moins une station d'accueil fixe sur laquelle au moins un élément constitutif du dispositif de changement peut être disposé au moins temporairement.

10. Installation selon au moins l'une quelconque des revendications précédentes,
**caractérisée en ce que**
l'installation présente au moins un dispositif d'identification pour identifier au moins un élément interchangeable et/ou au moins un dispositif de détection qui permet une détermination de position d'au moins un élément du dispositif de changement.

11. Procédé pour faire fonctionner une installation de fabrication de récipients en matière plastique, dans lequel, dans un mode de travail de l'installation, des préformes en matière plastique sont chauffées avec un dispositif de chauffage (2) et dans lequel un dispositif de transport (22) transporte les préformes en matière plastique (10) le long d'un premier trajet de transport (P1) prédéfini ainsi qu'une pluralité de dispositifs de maintien (24) qui maintiennent des préformes en matière plastique, et au moins une unité de chauffage qui chauffe les préformes en matière plastique pendant leur transport et dans lequel un dispositif de façonnage (4) dilate par ailleurs les préformes en matière plastique chauffées par le dispositif de chauffage (2) par exposition à un milieu fluide et les façonne ainsi en les récipients en matière plastique, dans lequel le dispositif de façonnage présente une pluralité de stations de façonnage, qui façonnent les préformes en matière plastique en les récipients en matière plastique et dans lequel à la fois le dispositif de chauffage (2) que le dispositif de façonnage (4) présentent des éléments interchangeables,
**caractérisé en ce que**
dans un mode de changement, un dispositif de changement (6) change à la fois des éléments interchangeables du dispositif de chauffage et des éléments interchangeables (44) du dispositif de façonnage, dans lequel le dispositif de changement est déplacé - notamment par un robot mobile - entre au moins deux positions différentes.

12. Procédé selon la revendication précédente,
**caractérisé en ce que**
le dispositif de changement est également équipé de différents dispositifs de préhension et/ou unités de changement pour effectuer le changement d'éléments interchangeables du dispositif de façonnage et le changement d'éléments interchangeables du dispositif de chauffage.

13. Procédé selon au moins l'une quelconque des revendications précédentes,
**caractérisé en ce que**
le dispositif de changement ou des éléments constitutifs du dispositif de changement sont déplacés au moins temporairement d'une première position (A) servant au changement d'éléments interchangeables du dispositif de façonnage dans une deuxième position (B) servant au changement d'éléments interchangeables du dispositif de chauffage.

14. Procédé selon au moins l'une quelconque des revendications précédentes,
**caractérisé en ce que**
des éléments interchangeables sont déposés au moins temporairement dans un dispositif de magasin et, de préférence, ce dispositif de magasin est également déplacé au moins temporairement dans différentes positions.

15. Procédé selon au moins l'une quelconque des revendications précédentes,
**caractérisé en ce que**
le dispositif de changement ou un élément constitutif du dispositif de changement est positionné et/ou fixé au moins temporairement sur une station d'accueil.
